(19) **Europäisches Patentamt / European Patent Office / Office européen des brevets**

(11) **EP 3 524 951 B2**

(12) ## NEUE EUROPÄISCHE PATENTSCHRIFT
Nach dem Einspruchsverfahren

(45) Veröffentlichungstag und Bekanntmachung des Hinweises auf die Entscheidung über den Einspruch:
**26.03.2025 Patentblatt 2025/13**

(45) Hinweis auf die Patenterteilung:
**24.03.2021 Patentblatt 2021/12**

(21) Anmeldenummer: **19154512.8**

(22) Anmeldetag: **30.01.2019**

(51) Internationale Patentklassifikation (IPC):
**G01K 17/08** (2006.01)    **F24D 19/10** (2006.01)
**G05D 23/19** (2006.01)

(52) Gemeinsame Patentklassifikation (CPC):
**G01K 17/08; F24D 19/1018; F24D 19/1048; G05D 23/1931**

(54) **HEIZKOSTENVERTEILER ZUR ERFASSUNG DER DURCH EINEN HEIZKÖRPER ABGEGEBENEN WÄRMEMENGE**

HEATING COST DISTRIBUTOR FOR DETECTING THE AMOUNT OF HEAT OUTPUT BY A RADIATOR

RÉPARTITEUR DE FRAIS DE CHAUFFAGE PERMETTANT DE DÉTECTER LA QUANTITÉ DE CHALEUR DISTRIBUÉE PAR UN CORPS DE CHAUFFE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2018 DE 102018103144**

(43) Veröffentlichungstag der Anmeldung:
**14.08.2019 Patentblatt 2019/33**

(73) Patentinhaber: **Techem Energy Services GmbH**
**65760 Eschborn (DE)**

(72) Erfinder:
• **Kähler, Arne, Dr.**
**61350 Bad Homburg (DE)**
• **Klein, Joachim**
**65760 Eschborn (DE)**

(74) Vertreter: **Keil & Schaafhausen Patentanwälte PartGmbB**
**Bockenheimer Landstraße 25**
**60325 Frankfurt am Main (DE)**

(56) Entgegenhaltungen:
**EP-A2- 2 068 138    EP-B1- 3 217 157**
**DE-A1- 3 301 422**

EP 3 524 951 B2

**Beschreibung**

Die Erfindung betrifft einen Heizkostenverteiler zur Erfassung der durch einen Heizkörper abgegebenen Wärmemenge gemäß dem Oberbegriff des Anspruchs 1. Der Heizkostenverteiler weist einen Vorlauftemperatursensor zur Messung der Vorlauftemperatur eines Wärmeträgermediums, vorzugsweise direkt am Vorlauf des Heizkörpers, und einen Raumlufttemperatursensor zur Messung einer Heizkörpertemperatur auf. Ferner weist der Heizkostenverteiler ein ihm zugeordnetes Heizkörperregelventil und eine Einrichtung zur Ermittlung einer Ventilhubstellung des Heizkörperregelventils auf. Eine Recheneinheit des vorgeschlagenen Heizkostenverteilers ist zur Bestimmung der abgegebenen Wärmemenge unter Verwendung der gemessenen Temperaturen eingerichtet.

Heizkostenverteiler sind weit verbreitet, um die Heizkosten insbesondere in einem Mehrfamilienhaus entsprechend dem Verbrauch auf die verschiedenen Parteien zu verteilen. Dazu sind die Heizkostenverteiler an den Heizkörpern des Hauses angebracht. Sie erfassen die von den einzelnen Heizkörpern abgegebene Wärmemenge. Die insgesamt entstehenden Heizkosten werden dann entsprechend einem Verteilschlüssel nach Grund- und Verbrauchskosten auf die Nutzeinheiten umgelegt.

In der Praxis werden im Wesentlichen zwei Typen von Heizkostenverteilern verwendet, die als 2-Fühler- oder 3-Fühler-Heizkostenverteiler bezeichnet werden.

Die 3-Fühler-Heizkostenverteiler messen eine Vorlauftemperatur $\vartheta_{VL}$ des auch als Heizmedium bezeichneten Wärmeträgermediums, eine Rücklauftemperatur $\vartheta_{RL}$ des Wärmeträgermediums und eine Raumtemperatur $\vartheta_{Raum}$ (Raumlufttemperatur), und berechnen hieraus die sogenannte logarithmische Übertemperatur $\Delta_{log}$

$$\Delta_{log} = \frac{\vartheta_{VL} - \vartheta_{RL}}{ln\left(\frac{\vartheta_{VL} - \vartheta_{Raum}}{\vartheta_{RL} - \vartheta_{Raum}}\right)}$$

Die abgegebene Wärmeleistung $\dot{Q}$ ergibt sich unter Verwendung der logarithmischen Übertemperatur $\Delta_{log}$ zu

$$\dot{Q} = \dot{Q}_N \cdot \left(\frac{\Delta_{log}}{\Delta_{log,N}}\right)^n,$$

wobei $\Delta_{log,N}$ die logarithmische Übertemperatur bei Referenz-Heizmediumstrom, $\dot{Q}_N$ die (für jeden Heizkörpertyp bekannte) Referenzleistung des Heizköpers und n der Heizkörperexponent ist. Diese Größen hängen von dem jeweils verwendeten Heizkörper ab und werden durch die Heizköperhersteller bekannt gegeben oder bei einer Messung unter Referenzbedingungen bestimmt.

Die in einem Zeitintervall $\Delta t$ abgegebene Wärmemenge $\Delta Q$ entspricht der in dem Zeitintervall $\Delta t$ integrierten Wärmeleistung $\dot{Q}$

$$\Delta Q = \int_{t=0}^{\Delta t} \dot{Q}\, dt.$$

Die 2-Fühler-Heizkostenverteiler messen dagegen eine Heizkörperoberflächentemperatur $\vartheta_{HK}$ und eine Raumlufttemperatur $\vartheta_{Raum}$, berechnen hieraus näherungsweise die logarithmische Übertemperatur $\Delta_{log}$

$$\Delta_{log} \approx k_{sys} \cdot (\vartheta_{HK} - \vartheta_{Raum})$$

und bestimmen daraus die Wärmeleistung $\dot{Q}$

$$\dot{Q} = \dot{Q}_N \cdot \left(k_{sys} \cdot (\vartheta_{HK} - \vartheta_{Raum})\right)^n = \dot{Q}_N \cdot k_{sys}{}^n \cdot (\vartheta_{HK} - \vartheta_{Raum})^n$$

$$\dot{Q} = k_{ges} \cdot (\vartheta_{HK} - \vartheta_{Raum})^n,$$

wobei $k_{ges} = \dot{Q}_N \cdot k_{sys}{}^n$ ein Faktor ist, der sowohl die Referenzleistung $Q_N$, als auch mit $k_{sys}$ den Wärmeübergang zwischen dem Heizkörper und der Luft auf die jeweiligen Temperaturfühler sowie Geräteeigenschaften berücksichtigt. Dieser

Faktor $k_{ges} = \dot{Q}_N \cdot k_{sys}{}^n$ ist für den verwendeten Heizköper und Heizkostenverteiler jeweils bekannt. Die 2-Fühler-Heizkostenverteiler sind in der Praxis am weitesten verbreitet.

Das grundlegende Prinzip der Heizkostenverteiler besteht also darin, die Wärmeleistung $\dot{Q}$ unter Verwendung gemessener Temperaturen, nicht jedoch mittels des Heizmediumstroms (Massestrom) $\dot{m}$ (respektive des Volumenstroms $\dot{V}$) des Heizmediums zu bestimmen. Hierfür wäre der Einbau eines entsprechenden Durchflusszählers in das Rohrleitungssystem bspw. vor dem Heizkörper notwendig, was die Installation einer Heizkostenerfassung sehr aufwendig und teuer machen würde.

Heizkostenverteiler sind daher auch regulatorisch von Wärmezählern unterschieden. Heizkostenverteiler, die der Produktnorm DIN EN 834 entsprechen und deren Konformität von einer sachverständigen Stelle geprüft und bescheinigt wurde, unterliegen nicht den eichrechtlichen Vorschriften bzw. den Bestimmungen für Wärmezähler der europäischen Messgeräterichtlinie MID, dürfen aber ohne weiteres nach der Heizkostenverordnung zur Verbrauchserfassung verwendet werden. Geräte, die den Heizmediumstrom $\dot{m}$ respektive den Volumenstrom $\dot{V}$ des Wärmeträgermediums messen, müssen demgegenüber die Anforderungen an Wärmezähler erfüllen. Für diese gelten neben hohen Anforderungen an die Messgenauigkeit auch Eichfristen von 5 Jahren.

Ebenfalls bekannt und weit verbreitet sind mechanische Thermostat-Heizkörperregelventile (auch als "mechanische Thermostatventile" bzw. "TRV" bezeichnet) sowie Raumtemperaturregelungen mit elektromotorischer Verstellung des Heizkörperregelventils (auch als "elektronische Thermostatventile" bzw. "eTRV" bezeichnet). Sowohl mechanische als auch elektronische Thermostatventile bestehen aus den Baugruppen "Ventilunterteil" und "Thermostatkopf". Die Baugruppe "Ventilunterteil" wird in der Rohrleitung montiert und enthält im Wesentlichen das eigentliche hydraulische Ventil mit einem nach außen geführten Ventilstößel. Auf dieser Baugruppe wird der mechanische oder elektronische Thermostatkopf befestigt, der den Ventilstößel zur Durchfluss- und damit Temperaturregelung betätigt. Bei mechanischen Thermostatköpfen erfolgt die Betätigung des Stößels durch die thermische Ausdehnung eines Dehnstoffelements, während elektronische Thermostatköpfe meist elektromotorisch arbeiten.

Mechanische Thermostatventile TRV werden geprüft nach der Produktnorm EN 215 und erfüllen die Anforderungen an Regelbarkeit der HeizkostenV und der EnEV. Bei elektronischen Thermostatköpfen eTRV besteht üblicherweise die Möglichkeit, einen vorprogrammierbaren Raumtemperatur-Zeitverlauf vorzugeben, um komfortabel Energie zu sparen (Nachtabsenkung, Temperaturabsenkung während regelmäßiger Abwesenheit oder dgl. Profilvorgaben).

Die wesentliche Aufgabenstellung für die Ermittlung der Wärmeleistung bei Integration des Heizkostenverteilers in ein Thermostatventil liegt darin, dass die am Einbauort des Thermostatventils erfassbaren Temperaturen (Vorlauftemperatur und Raumlufttemperatur) hierfür nicht ausreichen, sondern entsprechend dem Prinzip des 3- Fühler oder auch 2- Fühlerheizkostenverteilers eine weitere Messgröße, insbesondere eine Heizkörperoberflächentemperatur oder eine Rücklauftemperatur benötigt wird, um das Prinzip des 3- Fühler oder auch 2-Fühlerheizkostenverteilers darzustellen. Die Ausführung einer weiteren Temperaturmessstelle würde aber die baulichen Vorteile der Integration gerade wieder aufheben. Darüber hinaus ist die Anbringung von 2-Fühlerheizkostenverteilern durch Spannelemente bzw. Schweißbolzen (für die der Lack an der Schweißstelle entfernt werden muss) auf Heizkörpern (in diesem Text synonym zu dem Begriff "Heizflächen" verwendet) aufwendig und teuer, und diese Art der Anbringung wird darüber hinaus als unschön und störend, oder bei Design- Heizkörpern gar als Beschädigung, empfunden. Nach einer möglichen späteren Umstellung auf andere Systeme bleiben nach einer Demontage ferner störende Spuren zurück.

Aus der EP 2 068 138 A2 ist ein Verfahren zur Bestimmung der Wärmeabgabe an einem Heizkörper bekannt, bei dem nur im Vorlauf oder nur im Rücklauf des Heizkörpers die Heizmediumtemperatur und eine den Durchfluss des Heizmediums repräsentierende Größe erfasst wird sowie aus diesen Größen, einer Raumtemperatur und zu einem Heizkörper gespeicherten Daten eine Wärmeabgabe rechnerisch ermittelt wird. Die den Durchfluss repräsentierende Größe und die Heizmediumtemperatur können in einem Stellventil gemessen werden, welches einem Heizkörper zugeordnet ist. Die den Durchfluss repräsentierende Größe ist die Hilfsgröße 'Ventilhub', weil bei gegebenem Differenzdruck am Ventil der Durchfluss eine eindeutige Funktion des Ventilhubs ist. Die vergleichsweise aufwändige Volumenstrommessung kann somit durch eine Längenmessung ersetzt werden, wobei zusätzlich der Differenzdruck an dem Ventil messtechnisch erfasst wird. Der Ventilhub selbst ist bei typischen Thermostatventilen eine Funktion der Regelabweichung (P-Regel-Verhalten). Die direkte Messung des Ventilhubs kann also auch durch Bestimmung der Sollwerteinstellung, z.B. durch Abgriff des Einstellwinkels mithilfe eines Potentiometers, und Messung der Raumtemperatur, vorzugsweise am Ort der Vorrichtung, erfolgen. Allerdings bleibt die Messung des Differenzdrucks und die - im Vorfeld durch Messreihen zu ermittelnde - Kennwertliste für die verschiedenen Differenzdrücke (oder andere Messgrößen) aufwendig.

Die EP 3 217 157 A1 beschreibt einen Heizkostenverteiler zur Erfassung der durch einen Heizkörper abgegebenen Wärmemenge mit einem Vorlauftemperatursensor zur Messung der Vorlauftemperatur eines Wärmeträgermediums, mit einem Heizkörpertemperatursensor zur Messung einer Heizkörpertemperatur und mit einer Recheneinheit, welche zur Bestimmung der abgegebenen Wärmemenge eingerichtet ist. Es ist vorgesehen, dass der Heizkostenverteiler ein Heizkörperregelventil mit einer bekannten und gegebenenfalls voreinstellbaren Betriebskennlinie für den Zusammenhang zwischen der Ventilhubstellung und dem Volumenstrom bei einem bekannten Differenzdruck des Wärmeträgermediums über das Heizkörperregelventil umfasst, wobei der Differenzdruck über das Heizkörperregelventil im Arbeitspunkt bekannt ist. Der Heizkostenverteiler weist eine Einrichtung zur Ermittlung der Ventilhubstellung des Heizkörperregelventils auf, und die Recheneinheit des Heizkostenverteilers ist dazu eingerichtet, die abgegebene Wärmemenge aus den Größen Ventilhubstellung, Vorlauftemperatur sowie Heizkörpertemperatur unter Verwendung der Betriebskennlinie des Heizkörperregelventils für den bekannten Differenzdruck zu berechnen. Dies setzt mindestens zwei Heizkörper-Temperatursensoren voraus. Einen Temperatursensor für die Vorlauftemperatur, der einfach in einen am Heizkörper-Thermostatventil angeordneten Heizkostenverteiler integrierbar ist, sowie einen weiteren Temperatursensor auf der Heizkörperoberfläche oder an dem Rücklauf, der aufwendig zu installieren und teuer ist. Üblicherweise weist der Heizkostenverteiler an dem Heizkörper-Thermostatventil zusätzlich zu dem Vorlauftemperatursensor (im Sinne eines Heizkörper-Tempertaturfühler) noch einen Raumluft-Temperaturfühler auf.

Vor diesem Hintergrund liegt die Aufgabe der Erfindung darin, einen am Thermostatventil eingebauten Heizkostenverteiler vorzuschlagen, der weder eine zusätzliche Temperaturmessstelle an dem Heizkörper, wie einen zweiten Heizkörpertemperatur-Temperatursensor auf der Heizkörperoberfläche bzw. am Heizkörperrücklauf, oder den Einbau eines Durchflusszähler noch Kennwertlisten oder andere Hilfsgrößen zur Ermittlung des Volumenstroms $\dot{V}$ bzw. Heizmediumstroms $\dot{m}$ des Heizmediums erfordert.

Diese Aufgabe wird erfindungsgemäß mit einem Heizkostenverteiler nach Anspruch 1 gelöst. Dabei ist vorgesehen, dass der Heizkostenverteiler ein Heizkörperregelventil mit einem dynamischen Ventilunterteil aufweist, das die Druckdifferenz über dem Thermostatventil in einer Heizungsanlage im Wesentlichen, d.h. bis auf Toleranzen, konstant hält. Die Heizungsanlage wird bei einer Inbetriebnahme wie üblich entsprechend so eingestellt, dass dafür ein ausreichender Vordruck allen Heizkörpern anliegt. Ferner weist der Heizkostenverteiler eine Einrichtung zur Ermittlung der Ventilhubstellung $h$ des Heizkörperventils auf. Die Recheneinheit des Heizkostenverteilers ist dazu eingerichtet, aus der ermittelten Ventilhubstellung sowie der gemessenen Vorlauftemperatur $\vartheta_{VL}$ und und der gemessenen Raumlufttemperatur $\vartheta_{Raum}$ die abgegebene Wärmemenge $\Delta Q$ zu berechnen, wobei aus der Vorlauftemperatur $\vartheta_{VL}$ und der Raumlufttemperatur $\vartheta_{Raum}$ unter Ausnutzung des konstanten Differenzdrucks $\Delta p$ über dem Heizkörperventil zunächst eine weitere, für die Wärmemengenabgabe des Heizkörpers charakteristische Heizkörpertemperatur $\vartheta_{RL}, \Delta_{log}, \vartheta_{HK}$ ermittelt wird, ohne dass die charakteristische Heizkörpertemperatur durch einen Temperaturfühler gemessen wird, insbesondere nicht durch einen weiteren an dem Heizkörper festgelegten Heizkörper-Temperaturfühler. Die abgegebene Wärmemenge $\Delta Q$ wird dann unter Verwendung mindestens der gemessenen Vorlauftemperatur $\vartheta_{VL}$ und der weiteren charakteristischen Heizkörpertemperatur $\vartheta_{RL}, \Delta_{log}, \vartheta_{HK}$ berechnet. Der erfindungsgemäße Heizkostenverteiler zeichnet sich also insbesondere auch dadurch aus, dass kein Heizkörperoberflächen-Temperatursensor und kein Heizkörper-Rücklauftempertatursensor vorgesehen ist.

Hierdurch werden Aufwand und Kosten für Herstellung, Montage und Betrieb des Heizkostenverteilers verringert und die Funktionen Wärmeleistungsermittlung (Heizkostenverteilung) und Raumtemperaturregelung auf einfache Weise in einem Gerät vereint.

Der augenblickliche Volumenstrom $\dot{V}$ durch ein Thermostatventilunterteil im Betrieb ist grundsätzlich abhängig von dem aktuellen Ventilhub $h$, der Druckdifferenz $\Delta p$ über dem Ventil und der geometrischen Gestalt der Durchflussquerschnitte, also dem Ventiltyp. Definiert man eine ventiltypspezifische Kenngröße $K_{VS}$ als den Volumenstrom bei maximalem Hub und einem Referenzdifferenzdruck von bspw. $\Delta p_{ref} = 1$ bar, so gilt für den augenblicklichen Volumenstrom

$$\dot{V}(h, \Delta p) = K_{VS} \cdot f(h) \cdot \sqrt{\frac{\Delta p}{\Delta p_{ref}}} = K_{VS} \cdot f(h) \cdot \sqrt{\frac{\Delta p}{1\,bar}}$$

mit den Größen:

$K_{VS}$ Volumenstrom bei maximalem Hub und $\Delta p = 1$ bar
$\Delta p$ aktuelle Druckdifferenz über dem Ventil
$\Delta p_{ref}$ Referenzdifferenzdruck
$f(h)$ dimensionsloser funktionaler Zusammenhang mit $f(h_{max}) = 1$.

Während sich also der Druckdifferenz ventiltypunabhängig bei festem Hub stets mit dem Term $\sqrt{\Delta p}$ auf den Durchfluss auswirkt, ist die Abhängigkeit des Volumenstroms vom Hub bei fester Druckdifferenz eine Folge der geometrischen Gestaltung der strömungswirksamen Querschnitte, wie z.B. von Ventilkegel, Ventilsitz und Gehäuse.

Definiert man $K_V(h)$ als den hubabhängigen Volumenstrom bei 1 bar Druckdifferenz $\Delta p$, so gilt also

$$K_V(h) = \dot{V}(h, \Delta p = 1 bar) = K_{VS} \cdot f(h) \cdot \sqrt{\frac{1\,bar}{1\,bar}}$$

$$K_V(h) = K_{VS} \cdot f(h)$$

mit

$K_V$ Volumenstrom bei 1 bar Druckdifferenz, abhängig vom Typ.

Für eine vernünftige Regelungsfunktion muss $K_V(h)$ zu $h$ in einem monton wachsenden (im Regelbereich streng monoton wachsenden) Zusammenhang stehen, das heißt mit zunehmender Ventilöffnung muss auch der Volumenstrom monoton ansteigen.

Bei realen Ventilen entsteht in der Regel trotz nominal geschlossenem Ventil ($h=0$) noch ein geringer Volumenstrom $K_{V0}$ aufgrund von Undichtigkeiten (Leckvolumenstrom). Das wirkt sich in der Kennlinie $K_V(h)$ wie eine Nullpunktverschiebung aus.

$$K_V(h) = K_{VS} \cdot g(h) + K_{V0}$$

mit

$g(h)$ dimensionsloser funktionaler Zusammenhang mit $g(h_{max}) = 1 - \frac{K_{V0}}{K_{VS}}$ und $g(0) = 0$

$K_{V0}$ kleinstmöglicher theoretischer Volumenstrom, abhängig vom Typ.

Bei ausgeführten, realen Ventilen findet man sowohl lineare, als auch progressive und degressive Funktionen für $K_V(h)$. Diese Funktionen können als Kennlinienfeld graphisch oder in Form von Messpunkten gegeben sein oder rechnerisch mittels Interpolation durch geeignete Polynome beschrieben, angenähert oder dargestellt werden:

$$K_V(h) = b_n \cdot h^n + \cdots + b_2 \cdot h^2 + b_1 \cdot h + b_0$$

mit

$b_0, b_1, b_2, \ldots b_n$ Polynomkoeffizienten.

Alternativ können Näherungen auch mit anderen geeigneten Funktionstermen (gebrochene Exponenten, Exponentialfunktion, Logarithmus, etc.) gegeben sein. Häufig sind die Kennlinien im interessierenden Bereich näherungsweise linear und die höheren Koeffizienten klein. Für ein Ventil mit einer linearen Kennlinie gilt:

$$K_V(h) = b_1 \cdot h + b_0$$

Definiert man noch das Stellverhältnis $S_V$ als

$$S_V = \frac{K_{VS}}{K_{V0}},$$

so errechnet sich am Beispiel eines Ventils mit linearer Kennlinie der Volumenstrom bei $\Delta p = 1$ *bar* (entsprechend der Definition der Größe $K_V$) zu

$$K_V(h) = \left(1 - \frac{1}{S_V}\right) \cdot K_{VS} \cdot h + K_{V0}$$

mit $S_V$ Stellverhältnis.

Insgesamt gilt also für den Volumenstrom eines linearen Ventils:

$$\dot{V} = \left(1 - \frac{1}{S_V}\right) \cdot K_{VS} \cdot h \cdot \sqrt{\frac{\Delta p}{1\,bar}} + K_{V0} \cdot \sqrt{\frac{\Delta p}{1\,bar}}$$

$$\dot{V} = \sqrt{\frac{\Delta p}{1\,bar}} \cdot b_1 \cdot h + \sqrt{\frac{\Delta p}{1\,bar}} \cdot b_0$$

Um einen optimalen hydraulischen Abgleich in Heizungsanlagen zu erreichen, sind Heizkörperregelventile mit sogenannten "dynamischen Ventilunterteilen" bekannt, deren Aufgabe darin besteht, die Druckdifferenz $\Delta p$ über dem Heizkörperregelventil (Thermostatventil) konstant zu halten, solange ein ausreichender Vordruck am Heizkörper anliegt, der in einer Heizungsanlage bei der Dimensionierung entsprechend gewählt wird. Andernfalls käme es zu Komforteinbußen, weil die benötigte Wärmeleistung in der Heizungsanlage nicht zur Verfügung stünde. Mit dieser Funktionalität soll also eine gleichmäßige hydraulische Versorgung aller Heizkörper in einer Anlage sichergestellt werden.

Am Markt verfügbar und im Stand der Technik bekannt sind dynamische Ventilunterteile, die eine Differenzdruck von meist $\Delta p_{dyn}$ = 0,1 *bar* einregeln. Zusätzlich ist noch mittels einer Voreinstellungsmimik der Volumenstrom bei maximalem Hub in n Stufen (z.B. *n* = 15) begrenz- und einstellbar auf typische Werte zwischen beispielsweise

$$\dot{V}_{max}(i) = 10\;{}^l/_h \dots 150\,{}^l/_h;\quad i = 1 \dots n.$$

Durch den konstant geregelten Differenzdruck wird die Ventilautorität $P_V$ konstant bzw. zu 1. Unter Kenntnis des sich aus der Voreinstellung ergebenden Maximalvolumenstroms besteht dann aufgrund der konstanten Druckdifferenz $\Delta p_{dyn}$ und somit eines konstanten Wertes für den Term $\sqrt{\frac{\Delta p_{dyn}}{1\,bar}} = konst$ der ein-deutige funktionale Zusammenhang zwischen der Ventilhubstellung und dem Volumenstrom

$$\dot{V} = \dot{V}_i(h)$$

mit

*i* gewählte Voreinstellung.

Für ein lineares Ventil folgt daraus beispielsweise:

$$\dot{V}_i = \left(1 - \frac{1}{S_{V,i}}\right) \cdot K_{VS,i} \cdot \sqrt{\frac{\Delta p_{dyn}}{1\,bar}} \cdot h + K_{V0} \cdot \sqrt{\frac{\Delta p_{dyn}}{1\,bar}}$$

$$\dot{V}_i = \sqrt{\frac{\Delta p_{dyn}}{1\,bar}} \cdot b_{1,i} \cdot h + \sqrt{\frac{\Delta p_{dyn}}{1\,bar}} \cdot b_{0,i}$$

$$\dot{V}_i = c_{1,i} \cdot h + c_{0,i}$$

$$\dot{V}_i = \dot{V}_{0,i} + \left(\dot{V}_{max,i} - \dot{V}_{0,i}\right) \cdot \frac{h}{h_{max}}$$

oder in relativen Größen:

$$\dot{V}_i = \dot{V}_{max,i} \cdot \left( \frac{\dot{V}_{0,i}}{\dot{V}_{max,i}} + \left( 1 - \frac{\dot{V}_{0,i}}{\dot{V}_{max,i}} \right) \cdot \frac{h}{h_{max}} \right)$$

$$\dot{V}_i = \dot{V}_{max,i} \cdot \dot{V}_{i,rel}$$

$$\dot{V}_{i,rel} = \dot{V}_{0,i,rel} + \left( 1 - \dot{V}_{0,i,rel} \right) \cdot h_{rel}$$

Aus dem Volumenstrom $\dot{V}$ ergibt sich der Heizmediumstrom $\dot{m}$ des Heizmediums zu

$$\dot{m} = \rho_{medium} \cdot \dot{V},$$

wobei $\rho_{medium}$ die bekannte Dichte des Heizmediums ist. Die Dichte des Heizmediums ist im Allgemeinen temperaturabhängig. Da die hierfür relevante Vorlauftemperatur $\vartheta_{VL}$ gemessen wird, ist dies leicht zu berücksichtigen:

$$\dot{m} = \rho_{medium}(\vartheta_{VL}) \cdot \dot{V}$$

Für die bei Heizkostenverteilern geforderte und übliche Genauigkeit kann jedoch auch mit einem konstanten Wert für die Dichte $\rho_{medium}$ gearbeitet werden.
Für ein lineares Ventil folgt also schließlich:

$$\dot{m}_i = \dot{m}_0 + \left( \dot{m}_{max,i} - \dot{m}_0 \right) \cdot \frac{h}{h_{max}}$$

Bei konstanter Druckdifferenz ergeben sich bei Darstellung beliebiger, also auch nichtlinearer, Ventilkennlinien

$$h_{rel} = \frac{h}{h_{max}}$$

als Polynom entsprechend funktionale Zusammenhänge in höheren Potenzen von $h$ bzw.

$$\dot{V}\left( h, \dot{V}_{max,i} \right) = c_n \cdot h^n + \cdots + c_2 \cdot h^2 + c_1 \cdot h + c_0$$

oder

$$\dot{m}\left( h, \dot{V}_{max,i} \right) = \rho_{medium} \cdot \left( c_n \cdot h^n + \cdots + c_2 \cdot h^2 + c_1 \cdot h + c_0 \right)$$

oder alternativ Näherungen mit anderen geeigneten Funktionstermen (gebrochene Exponenten, Exponentialfunktion, Logarithmus, etc.).
Die für $\dot{V}$ und $\dot{m}$ verschiedenen Koeffizienten $c_j$ sind dabei abhängig von der Ventil-Voreinstellung $\dot{V}_{max}(i)$-, $i = 1...n$ und vom tatsächlich geregelten Differenzdruck $\Delta p_{dyn}$.
Für die verschiedenen dynamischen Ventiltypen bzw. Ventilunterteile sind die Konstanten $c_{n,i}... c_{2,i}, c_{1,i}, c_0$ aus Herstellerangaben bekannt oder können aus einem Kennlinienfeld des Herstellers ermittelt werden. Alternativ können die Kennlinien durch Messungen auf einem Prüfstand für die jeweiligen dynamischen Ventiltypen bzw. Ventilunterteile ermittelt werden, bspw. durch Volumenstrommessungen bei verschiedenen Ventil-Voreinstellung $\dot{V}_{max}(i)$; $i = 1...n$ und Ventilhubstellungen $h$ und bei tatsächlich geregeltem Differenzdruck $\Delta p_{dyn}$ sowie mathematische Anpassung der vorstehenden funktionalen Beziehungen (Fit) in grundsätzlich bekannter Weise.
Damit liegen erfindungsgemäß alle benötigten Informationen vor, um rechnerisch zunächst eine weitere charakteristische Heizkörpertemperatur zu ermitteln und dann mit den aus der Heizkostenerfassung bekannten Zusammenhängen die durch den Heizkörper abgegebene Wärmemenge zu erfassen. Dies ist ohne weitere Messreihen oder das Vorsehen weiterer Temperatursensoren möglich, sobald die Konstanten $c_{n,i}... c_{2,i}, c_{1,i}, c_0$ einmal für den Typ eines dynamischen Ventils bzw. Ventilunterteils bekannt oder bestimmt sind.
Gemäß der Erfindung ist vorgesehen, dass die Recheneinheit des Heizkostenverteilers für die Ermittlung der weiteren charakteristischen Heizkörpertemperatur dazu eingerichtet ist,

- aus der Ventilhubstellung $h$ einen Näherungswert für den Heizmediumstrom $\dot{m}$ zu ermitteln und
- mit dem Näherungswert für den Heizmediumstrom $\dot{m}$ und den gemessenen Größen Vorlauftemperatur $\vartheta_{VL}$ und Raumlufttemperatur $\vartheta_{Raum}$ die weitere charakteristische Heizkörpertemperatur zu ermitteln.

Beispielsweise kann die Recheneinheit des Heizkostenverteilers entsprechend dazu eingerichtet sein, den Näherungswert für den Heizmediumstrom $\dot{m}$ bei einem konstanten Differenzdruck $\Delta p$ für die Ventilhubstellung $h$ unter Verwendung einer ventiltypspezifischen Kenngröße $K_{VS}$, $S_V$, die den Volumenstrom bei maximaler Ventilhubstellung $h_{max}$ und einem Referenzdifferenzdruck $\Delta p_{ref}$ angibt, und einem dimensionslosen funktionalen Zusammenhang $f(h)$ für die Abhängigkeit von der Ventilhubstellung $h$ zu ermitteln.

Der Vorteil der vorbeschriebenen Vorgehensweisen liegt darin, dass die aus der 2- oder 3-Fühlermessung bekannten Formeln und etablierten Messprinzipen hier unmittelbar genutzt werden können.

Erfindungsgemäß wird vorgeschlagen, dass die die weitere charakteristische Heizkörpertemperatur

- eine logarithmische Übertemperatur $\Delta_{log}$ des Heizkörpers oder ein (bspw. arithmetisches) Mittel der Vorlauftemperatur $\vartheta_{VL}$ und einer ermittelten Rücklauftemperatur $\vartheta_{RL}$, und/oder
- eine Heizkörperoberflächentemperatur $\vartheta_{HK}$ an einer bestimmten Position $x$ der Oberfläche des Heizkörpers

ist.

Erfindungsgemäß können auch mehrere charakteristische Heizkörpertemperaturen ermittelt und/oder bestimmt werden.

Die Recheneinheit des Heizkostenverteilers ist erfindungsgemäß also dazu eingerichtet, das nachfolgend beschriebene erfindungsgemäße Verfahren durchzuführen, wobei als optional gekennzeichnete Schritte auch weggelassen werden können:

- Messung von Vorlauftemperatur $\vartheta_{VL}$ und Raumlufttemperatur $\vartheta_{Raum}$;
- Messung des Ventilhubs (d.h. der Ventilhubstellung $h$) oder einer Größe, aus der der Ventilhub abgeleitet werden kann, wie z.B. dem Sollhub oder der Stellgröße einer Raumtemperaturregelung im Sinne einer Hubwertvorgabe;
- Ermitteln eines Näherungswerts für den Volumenstrom $\dot{V}$ bzw. den Heizmediumstrom $\dot{m}$ des Heizmediumstroms aus der Ventilhubstellung $h$;
- Ermitteln eines Näherungswerts für die Rücklauftemperatur $\vartheta_{RL}$ und für eine Heizkörperoberflächentemperatur $\vartheta_{HK} = \vartheta_x$ an einer bestimmten Position $x$ der Oberfläche des Heizkörpers $HK$ aus dem Heizmediumstrom $\dot{m}$, der Vorlauftemperatur $\vartheta_{VL}$ und der Raumlufttemperatur $\vartheta_{Raum}$; und/oder Berechnen der logarithmische Übertemperatur $\Delta_{log}$ oder eines (bspw. arithmetischen oder anders gewichteten) Mittelwerts der gemessenen Vorlauftemperatur $\vartheta_{VL}$ und der ermittelten Rücklauftemperatur $\vartheta_{RL}$,
- Bestimmung der Wärmeleistung $\dot{Q}$ / Wärmeabgabe $\Delta Q$ des Heizkörpers anhand der Größen Vorlauftemperatur $\vartheta_{VL}$, Raumlufttemperatur $\vartheta_{Raum}$, und der berechneten weiteren charakteristischen Heizkörpertemperatur(en) sowie der für den Heizkörper im Rahmen der Heizkostenerfassung ohnehin bekannten Heizkörperreferenzleistung $\dot{Q}_N$ und ggf. dem bekannten Heizkörperexponenten $n$ oder einem Näherungswert $y$ für den Heizköperexponenten $n$, beispielsweise mittels

   ∘ Durchführung des 3-Fühler-Verfahrens unter Verwendung der logarithmischen Übertemperatur
   ∘ Durchführung des 2-Fühler-Verfahrens unter Verwendung einer mittleren Heizkörpertemperatur (zum Beispiel arithmetisches Mittel oder berechnete Temperatur an einer Position auf dem Heizkörper)

Eine besonders bevorzugte Ausführungsform der Erfindung sieht vor, dass das Heizkörperregelventil des Heizkostenverteilers Bestandteil einer Raumtemperaturregelung ist, welche die Raumtemperatur durch Einstellen des Heizmediumstroms regelt. Die Raumtemperaturregelung kann bspw. eine autark arbeitende Raumtemperaturregelung sein, d.h. eine Raumtemperaturregelung, die die Raumtemperatur lokal einregelt. Damit ist gemeint, dass die Raumtemperaturregelung nur die lokal erfassten Temperaturwerte verwendet, bspw. als mechanisches Thermostatventil oder eine elektronische Regelung mit mindestens einem angeschlossenen (per Kabel oder Funk) Temperatursensor. Hierbei wird ausgenutzt, dass für die Heizkostenverteilung und die Temperaturregelung im Wesentlichen dieselben Messgrößen erfasst werden müssen, was zu erheblichen Synergien in dem erfindungsgemäß vorgeschlagen Heizkostenverteiler führt, weil insbesondere eine Vielzahl der Komponenten der zur Messwerterfassung vorgesehenen Sensorik nicht doppelt vorgesehen werden muss. Außerdem ergibt sich eine kompaktere Ausgestaltung eines Heizkostenverteilers, der zusammen mit dem Heizkörperregelventil als Raumtemperaturregelung am Vorlauf (Zulauf) des Heizkörpers angeordnet ist. Störende Aufbauten an dem Heizkörper, die unter Umständen zu dauerhaften Beschädigungen der Heizkörperoberfläche führen, können entfallen.

Gemäß einer konkreten Ausgestaltung der erfindungsgemäß vorgeschlagenen Kombination von Heizkostenverteiler und Raumtemperaturregelung kann das Heizkörperregelventil als Raumtemperaturregler mit einem mechanischen Thermostatkopf und ggf. einem Positionsdetektor ausgebildet sein, der zur Messung der Ventilhubstellung h des Heizkörperregelventils eingerichtet ist, bspw. durch Messen der Position des den Heizmediumstrom einstellenden Ventilstößels des Heizkörperregelventils. Diese Kombination ist mit also einfach mit herkömmlichen mechanischen Thermostatventilen realisierbar.

Ergänzend kann erfindungsgemäß ein vorzugsweise fremdenergetisch motorisch oder elektronisch betriebenes Stellglied vorgesehen werden, welches auf den mechanischen Thermostatkopf zum Einstellen des Heizmediumstroms einwirkt. Dies kann durch Einstellen des Thermostatkopfs zur Temperaturvorwahl, bspw. im Sinne eines elektromotorischen Antriebs zum Verstellen des Thermostatkopfes oder durch Einwirken auf die Mimik des Thermostatkopfes zum Ändern der Temperaturabhängigkeit des mechanischen Thermostatkopfes, erfolgen. Letzteres kann bspw. durch Verändern einer elastischen Vorspannung realisiert werden, mit der ein Ventilstößel zum Einstellen des Heizmediumstroms beaufschlagt wird. Dies ermöglicht die Vorgabe eines Temperatur-Zeitprofils, bspw. im Rahmen einer Nachtabsenkung der Raumtemperatur. Ein elektronisch betriebenes Stellglied ist bspw. ein elektrochemisches Stellglied oder sonstiges Stellglied ohne Getriebe.

In einer alternativen Ausführungsform kann das Heizkörperregelventil als insbesondere elektronischer Raumtemperaturregler mit einem motorisch, vorzugsweise elektromotorisch, oder elektronisch betriebenen Thermostatkopf zum Einstellen des Heizmediumstroms ausgebildet sein, wobei der Thermostatkopf durch Vorgabe einer Hubwertvorgabe des Raumtemperaturreglers positioniert wird. Insbesondere kann der Thermostatkopf mit einem Anschlagselement bzw. Stellantrieb ausgebildet sein, das bzw. der in Axialrichtung des Stößels verschiebbar ausgebildet ist und entsprechend einer Abweichung einer Ist-Raumtemperatur zu einer Soll-Raumtemperatur durch die von dem Raumtemperaturregler erzeugte Hubwertvorgabe verstellt wird, um dabei auf den Stößel einzuwirken. Der Thermostatkopf wirkt also nur durch Zusammenwirken mit dem Vorlauftemperatursensor und der Recheneinheit des Raumtemperaturreglers als Thermostat in dem Sinne, dass eine temperaturabhängige Verstellung des Ventilstößels erfolgt. Ein elektronisch betriebener Thermostatkopf ist ein mit jedweder Art von elektrischer Energie betriebener Thermostatkopf.

In einer solchen erfindungsgemäßen Ausgestaltung kann vorgesehen sein, dass die Einrichtung zur Ermittlung der Ventilhubstellung $h$ dazu eingerichtet ist, die Ventilhubstellung $h$ aus einer Hubwertvorgabe des Raumtemperaturreglers zu ermitteln. Die Hubwertvorgabe kann ein Hubsollwert oder eine unmittelbar auf das Anschlagselement bzw. den Stellantrieb einwirkende Stellgröße sein.

Sofern in einer erfindungsgemäßen Ausgestaltung der Heizkostenverteiler und das Heizkörperregelventil in separaten Gehäusen ausgebildet sind, ist vorzugweise eine Nahfeldkommunikation zwischen den beiden separaten Gehäusen vorgesehen. In dem Gehäuse des Heizkörperregelventils ist dann vorzugsweise zumindest der Vorlauftemperatursensor vorgesehen, weil die Vorlauftemperatur am einfachsten und genausten im Bereich des Ventils, bspw. an dem in das Heizmedium hineinragenden Ventilstößel, gemessen werden kann. Sofern das Heizkörperregelventil als elektronische Raumtemperaturregelung ausgebildet ist, kann auch der Raumlufttemperatursensor mit in das Gehäuse des Heizkörperventils integriert sein. Damit liegen auch die für die Heizkostenverteilung benötigten Informationen in einer Recheneinheit des integrierten Heizkörperregelventils mit elektronischer Raumregelung vor. In diesem Fall ist es für einen erfindungsgemäßen Heizkostenverteiler ausreichend, eine vorzugsweise als drahtlose Nahfeldkommunikation oder als Kontaktkommunikation (mit einem als bspw. Kabel, Draht oder Stecker realisierten Kommunikationsanschluss) ausgebildete Kommunikation vorzusehen, mit der die Sensordaten und/oder die Werte der Ventilhubstellung $h$ sowie der gemessenen Vorlauftemperatur $\vartheta_{VL}$ und Raumlufttemperatur $\vartheta_{Raum}$ an die in dem Gehäuse des Heizkostenverteilers integrierte Recheneinheit übertragen werden. Bei der drahtlosen Nahfeldkommunikation bietet sich insbesondere eine Kommunikation mit RFID-Chip an, die auch eine Anordnung der beiden Gehäuse ohne unmittelbare Kontaktflächen erlaubt.

Wichtig ist in diesem Zusammenhang, dass auch die Energieversorgung für die Nahfeldkommunikation in dem Gehäuse des Heizkostenverteilers sowie für die zur Heizkostenverteilung notwendigen Sensoren (Vorlauftemperatursensor, Raumlufttemperatursensor und Sensor für die Ermittlung der Ventilhubstellung sichergestellt ist, vorzugsweise mit einer von der Raumtemperaturregelung in dem Heizkörperregelventil separaten Energieversorgung.

In diesem Zusammenhang kann es zur Sicherstellung der Energieversorgung auch vorteilhaft sein, den Raumlufttemperatursensor und den Vorlauftemperatursensor durch die Energieversorgung des Heizkostenverteilers zu betreiben und eine Kommunikationsverbindung zu der Recheneinheit des Raumtemperaturreglers vorzusehen. Damit ist die Messwerterfassung für den Heizkostenverteiler sichergestellt.

Um die Erfassung auch der Ventilstellung sicherzustellen, wenn die Energieversorgung des Heizkörperventils mit der elektronischen Raumtemperaturregelung ausfällt, wird gemäß einer besonderen Ausführungsform der Erfindung vorgeschlagen, einen von der Raumtemperaturregelung mit Hubwertvorgabe separaten Sensor (ggf. zusätzlich) vorzusehen, der unmittelbar die Ventilhubstellung $h$ des Heizkörperregelventils detektiert, unabhängig von der Hubwertvorgabe durch die Raumtemperaturregelung. Damit wird immer die tatsächliche Hubstellung des Ventils gemessen, auch wenn die Energieversorgung für die Raumtemperaturregelung und die elektromotorische Verstellung des Heizkörperregelventils ausfällt.

Entsprechend wird gemäß einer erfindungsgemäß bevorzugten Ausführung vorgeschlagen, die Einrichtung zur Ermittlung der Ventilhubstellung des Heizkörperventils als Positionssensor oder Positionsgeber auszubilden, der die Stellung des Ventilhubs des Heizkörperregelventils detektiert oder messbar einstellt. Dies kann bspw. ein Positionssensor zur Erfassung der Position eines Ventilstößels in dem Heizkörperregelventil sein. Derartige Positionssensoren sind dem Fachmann bekannt und können durch ihn geeignet gewählt werden. Beispielsweise kann dies induktiv durch eine radial um den Ventilstößel angeordnete Spule (Stößel als Spulenkern) oder kapazitiv durch eine axiale Näherungssensorik geschehen, die auf die Stößelstirnseite gerichtet ist. Als Positionssensor kommt auch ein Dehnungsmessstreifen in Frage. Als Positionsgeber kann auch bspw. ein festes Getriebe verwendet werden, dessen Position bzw. Stellung messbar ist und damit eine Ermittlung der Ventilhubstellung ermöglicht.

Der Vorteil eines solchen separaten Positionssensors oder -gebers liegt darin, dass dieser auch unabhängig von einer ggf. durch eine auswechselbare Batterie für die elektronische Raumtemperaturregelung und die elektromotorische Verstellung des Heizkörperregelventils Energieversorgung betrieben werden kann, bspw. durch die sicher auf einen vorgegebenen Einsatzzeitraum von 10 oder mehr Jahren ausgelegte Energieversorgung des Heizkostenverteilers. Dies gilt auch für die Vorlauftemperatur- und Raumlufttemperatursensoren, deren Daten für die Heizkostenverteilung benötigt werden. Die Energieversorgung für alle Funktionen des Heizkostenverteilers, die für die Heizkostenerfassung und Anzeige notwendig sind, werden erfindungsgemäß bevorzugt durch eine nichtauswechselbare Energieversorgung (insbesondere eine geeignete Langzeitbatterie), bspw. in einem gekapselten und durch eine Plombierung gegen Manipulation gesicherten Bereich des Gehäuses, realisiert.

Erfindungsgemäß können der Heizkostenverteiler und das Heizkörperregelventil eine Gehäuseeinheit bilden, d.h. in dasselbe Gehäuse integriert sein. In diesem Fall können die Recheneinheiten des Heizkostenverteilers und des als Raumtemperaturregelung ausgebildeten Heizkörperregelventils auch durch eine gemeinsame Recheneinheit gebildet werden, welche dazu eingerichtet ist, sowohl die Funktionen des Heizkostenverteilers als auch die Funktionen der Raumtemperaturregelung (und/oder des elektromotorischen Stellantriebs zur Vorgabe eines Temperatur-Zeitprofils) auszuführen. Auch diese gemeinsame Recheneinheit würde dann vorzugsweise durch die Energieversorgung des Heizkostenverteilers versorgt, weil auch Funktionen des Heizkostenverteilers betroffen ist.

Auch bei einer Realisierung des Heizkostenverteilers mit dem Heizkörperregelventil in einem Gehäuse kann es erfindungsgemäß bevorzugt sein, die für die Funktion der Heizkostenverteilung notwendigen Komponenten, insbesondere also den Vorlauftemperatursensor, den Raumlufttemperatursensor, die Einrichtung zur Ermittlung der Ventilhubstellung (ggf. einschließlich einem Ventilstößel des Heizkörperregelventils), die zur Durchführung der Heizkostenverteilung eingerichtete Recheneinheit sowie deren Energieversorgung, in einem gegen Manipulation bspw. durch eine Verplombung gesicherten, gekapselten Gehäuseteil aufzunehmen. Hierdurch werden unerkannte Manipulationen an den Komponenten des Heizkostenverteilers verhindert. Ggf. kann der Heizkostenverteiler auch ein separates Display als Anzeigevorrichtung zur Anzeige der für die Heizkostenverteilung relevanten Verbrauchswerte aufweisen.

Der Heizkostenverteiler und das Heizkörperregelventil können separate Energieversorgungen aufweisen, insbesondere wenn das Heizkörperregelventil eine elektrisch betriebene Raumtemperaturregelung und/oder einen elektromotorisch einstellbaren Thermostatkopf aufweist. Vorzugsweise kann die Energieversorgung des Heizkörperregelventils mit Raumtemperaturregelung durch eine von dem Benutzer wechselbare Batterie gebildet sein. Die Energieversorgung des Heizkostenverteilers sollte dagegen erfindungsgemäß bevorzugt durch eine durch den Benutzer nichtwechselbare Batterie erfolgen, die auf eine sichere Einsatzzeit von mind. 10 Jahren ausgelegt ist. Eine durch den Benutzer nicht-wechselbare Batterie bedeutet insbesondere, dass diese Batterie in einem für den Benutzer zerstörungsfrei nicht zugänglichen Gehäusebereich angeordnet ist.

Erfindungsgemäß kann vorgesehen sein, dass die Energieversorgung des Heizkörperregelventils eine Komponente zur Energiegewinnung aus der Umgebung aufweist. Die Energie kann bspw. aus der Umgebungswärme der Raumluft und/oder des Heizmediums und/oder aus Umgebungslicht gewonnen werden. Dies wird auch als Energy-Harvesting bezeichnet. Geeignete Komponenten können Oberflächenwellensensoren (ähnlich der RFID-Technologie), Peltier-Elemente und/oder Solarzellen sein. Zur Speicherung der durch diese Komponenten vorgesehen Energie können bspw. auch ein oder mehrerer Akkumulatoren vorgesehen werden.

Weitere Vorteile, Merkmale und Anwendungsmöglichkeiten der Erfindung ergeben sich aus der nachfolgenden Beschreibung verschiedener Ausführungsformen und der Zeichnung.

Es zeigen:

Fig. 1    schematisch einen Verfahrensablauf zur Erfassung der durch einen Heizkörper abgegebenen Wärmemenge in einem erfindungsgemäß vorgeschlagenen Heizkostenverteiler gemäß einer Ausführungsform der Erfindung;

Fig. 2    schematisch den Aufbau eines Heizkostenverteilers mit einem durch einen mechanischen Thermostatkopf eines Heizkörperregelventils gebildeten Raumtemperaturregler nach einer Ausführungsform der Erfindung;

Fig. 3    schematisch den Aufbau eines Heizkostenverteilers mit einem durch einen mechanischen Thermostatkopf eines Heizkörperregelventils gebildeten Raumtemperaturregler nach einer weiteren Ausführungsform der Erfindung;

Fig. 4    schematisch den Aufbau eines Heizkostenverteilers mit einem elektronischen Raumtemperaturregler in einem Heizkörperregelventil nach einer weiteren Ausführungsform der Erfindung;

Fig. 5    eine schematische Darstellung einer Kurvenschar für das Heizmedium Wasser mit der Dichte $\rho_{Wasser}$ und einen Ventiltyp *Typ* mit dem Heizmediumstrom $\dot{m}$ als Funktion des Ventilhubs $h$ für verschiedene Voreinstellungen $i$ des Heizköperregelventils;

Fig. 6    eine Darstellung der Genauigkeit bei der Ermittlung der Rücklauftemperatur $\vartheta_{RL}$, dargestellt als Abweichung der Übertemperatur $\vartheta_{RL}$ - $\vartheta_{Raum}$ zwischen berechneten und gemessenen Werten gemäß einer ersten erfindungsgemäßen Variante;

Fig. 7    eine Darstellung der Genauigkeit bei der Ermittlung der Rücklauftemperatur $\vartheta_{RL}$, dargestellt als Abweichung der Übertemperatur $\vartheta_p$, - $\vartheta_{Raum}$ zwischen berechneten und gemessenen Werten gemäß einer zweiten erfindungsgemäßen Variante;

Fig. 8    eine Darstellung der prozentualen Abweichung der berechneten Heizkörperleistung von gemessenen Werten in Abhängigkeit von dem Heizmediumstromverhältnis gemäß einer Ausführungsform; und

Fig. 9    eine Darstellung der prozentualen Abweichung der berechneten Heizkörperleistung von gemessenen Werten in Abhängigkeit von dem Heizmediumstromverhältnis gemäß einer weiteren Ausführungsform.

Bevor im Folgenden beispielhaft verschiedene Ausführungsformen der Erfindung mit Bezug auf die Zeichnung beschrieben werden, soll ein besonders wesentliches Erfindungsmerkmal zur Berechnung der durch einen Heizkörper abgegebenen Wärmemenge $\Delta Q$ anhand verschiedener konkreter Ausgestaltungen beschrieben werden. Der Fachmann versteht diese Ausgestaltungen als Beispiele für Verfahren zur Bestimmung der abgegebenen Wärmemenge $\Delta Q$, die in der beschrieben Weise oder mit fachmännischen Abwandlungen in der Recheneinheit des erfindungsgemäß vorgeschlagenen Heizkostenverteilers eingerichtet sein können. Insbesondere kann der Fachmann unterschiedliche Merkmale der verschiedenen beschriebenen Varianten in beliebiger Weise kombinieren, um jeweils den mit den Teilmerkmalen erreichten Zweck in der Gesamterfindung umzusetzen.

Verfahrensschritt 1

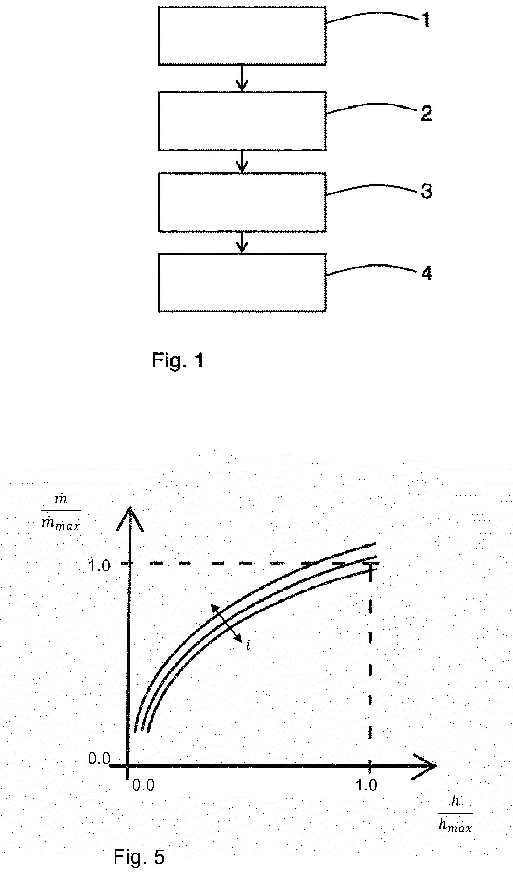

Der in Fig. 1 dargestellte mögliche Verfahrensablauf für das Bestimmen der abgegebenen Wärmemenge eines Heizkörpers beginnt mit dem Messen von Vorlauftemperatur $\vartheta_{VL}$ und Raumlufttemperatur $\vartheta_{Raum}$ sowie dem Ermitteln der Ventilhubstellung $h$ in einem Verfahrensschritt 1.

Verfahrensschritt 2

In einem zweiten Verfahrensschritt 2 wird aus der ermittelten Ventilhubstellung $h$ der Heizmediumstrom $\dot{m}$ des Heizmediums zum Zeitpunkt der Messung in Verfahrensschritt 1 ermittelt. Aufgrund des eineindeutigen Zusammenhangs zwischen Volumenstrom $\dot{V}$ und Ventilhub $h$ bei konstanter Druckdifferenz $\Delta p$ kann ein Näherungswert für den Heizmediumstrom $\dot{m}$ bestimmt werden aus einer für den Typ des Heizkörperregelventils bekannten Kurvenschar

$$\dot{m} = f(\rho_{medium}, h, i, Typ),$$

wobei die Kurvenschar neben dem Ventilhub $h$ von dem *Typ* des Ventils, ggf. von einer Voreinstellung $i$ des Volumenstroms bei maximalem Hub und der Dichte $\rho_{medium}$ abhängt. Eine entsprechende Kurvenschar ist zur Veranschaulichung schematisch für das Heizmedium Wasser mit der Dichte $\rho_{Wasser}$ und einen Ventiltyp *Typ* mit dem Heizmediumstrom $\dot{m}$ als Funktion des Ventilhubs $h$ für verschiedene Voreinstellungen $i$ des Heizköperregelventils in Fig. 5 dargestellt, wobei der Ventilhub und der Heizmediumstrom jeweils als relative Größen (d.h. normiert auf den maximalen Ventilhub $h_{max}$ und den maximalen Heizmediumstrom $\dot{m}_{max}$) bis zu dem Wert 1 dargestellt sind. Derartige Informationen sind Datenblättern der Heizkörperregelventile mit dynamischem Ventilunterteil zu entnehmen oder können einfach auf einem Mess- bzw. Prüfstand durch entsprechende Volumenstrommessungen bei verschiedenen Ventilhubstellungen $h$, ggf. jeweils separat für verschiedene Voreinstellungen *i* des Heizköperregelventils, ermittelt werden. Der technische Zusammenhang wurde durch obenstehende Formeln bereits beschrieben.

Die Ventilhubstellung *h* wird entweder direkt gemessen, aus der Messung von an der Bewegung von Hubstellung beteiligten Bauelementen indirekt gemessen und/oder aus Parametern und Werten des Raumtemperaturreglers abgeleitet, wie z.B. dem Hubsollwert oder der Stellgröße als Hubwertvorgabe. Geeignete Positionssensoren oder Positionsgeber sind im Stand der Technik bekannt. Eine parallele Messung der Ventilhubstellung *h* mit einem Positionssensor und das Ermitteln aus einer Hubwertvorgabe erlaubt darüber hinaus eine Fehlererkennung bei dem Raumtemperaturregler, falls eine signifikante Abweichung zwischen den parallel ermittelten Werten vorliegt.

Verfahrensschritt 3

Im folgenden Verfahrensschritt 3 wird aus dem Näherungswert für den Heizmediumstrom $\dot{m}$ eine weitere charakteristische Heizkörpertemperatur ermittelt, die dann im Verfahrensschritt 4 zur Bestimmung der durch den Heizkörper abgegebenen Wärmemenge $\Delta\dot{Q}$ bzw. der Wärmeleistung Q herangezogen wird.

Für die Verfahrensschritte 3 und 4 werden nachfolgend verschiedene Möglichkeiten angegeben. Die Schritte 3 und 4 können auch in einem Schritt zusammengefasst sein.

Ferner wird dann auch noch eine Möglichkeit angegeben, wie die Verfahrensschritte 2, 3 und 4 in einen Schritt zusammengefasst werden können.

Vorzugsweise umfasst die Ermittlung der weiteren charakteristischen Heizkörpertemperatur in jedem Fall das Ermitteln der Rücklauftemperatur $\vartheta_{RL}$. Die Rücklauftemperatur $\vartheta_{RL}$ kann entweder selbst als weitere charakteristische Heizkörpertemperatur verwendet werden oder als Grundlage für die Berechnung einer anderen 'weiteren charakteristischen Heizkörpertemperatur' dienen. Hierzu werden im Folgenden verschiedene Möglichkeiten konkret beschrieben:

Erste Variante für Verfahrensschritt 3

Die erste Möglichkeit besteht in der bekannten differenziellen Wärmebilanz (Wärmezufuhr = Wärmeabfuhr) am durchströmten Heizrohr prismatischen Querschnitts (als den Berechnungen üblicher Weise und in guter Nährung für verschiedene Querschnitte zugrundegelegten Querschnitt) unter der Annahme eines konstanten äußeren Wärmeübergangs und Lösung der Differentialgleichung. Der Ansatz:

$$dÔ = -\dot{m} \cdot c_p \cdot d(\vartheta_x - \vartheta_{Raum}) = k_1 \cdot A \cdot (\vartheta_x - \vartheta_{Raum}) \cdot dx$$

mit

$\vartheta_x$    Oberflächentemperatur an der Stelle x
$k_1$    Wärmeübergangsbeiwert
$A$    Oberfläche des differenziellen Rohrabschnitts
$c_p$    spez. Wärmekapazität des Mediums
$x$    dimensionslose Koordinate $x = X/H$ positiv gerechnet ab dem Rohranfang (entsprechend dem Vorlaufanschluss)
$X$    dimensionsbehafteter Abstand von Vorlauf
$H$    Rohrgesamtlänge

führt nach Integration und Einsetzen der Randbedingungen zu der bekannten Gleichung für den Temperaturverlauf

$$\vartheta_x - \vartheta_{Raum} = (\vartheta_{VL} - \vartheta_{Raum}) \cdot e^{-\left(\frac{k_1 \cdot A}{\dot{m} \cdot c_p}\right) \cdot x}$$

und für die Rücklauftemperatur mit *x=1* zu

$$\vartheta_{RL} = \vartheta_{Raum} + (\vartheta_{VL} - \vartheta_{Raum}) \cdot e^{-\left(\frac{k_1 \cdot A}{\dot{m} \cdot c_p}\right)}.$$

Mit dem sich aus diesem Modell des konstanten äußeren Wärmeübergangs ergebenden Ansatz $Q = \int d\dot{Q}$ kann man die Konstanten $c_p$, $k_1$, $A$ durch Kennwerte aus einer Referenzmessung, z.B. der Heizkörperleistungsmessung, ersetzen:

$$\dot{Q} = -\dot{m} \cdot c_p \cdot (\vartheta_{VL} - \vartheta_{RL})$$

$$\dot{Q} = k_1 \cdot A \cdot \Delta_{log}$$

$$\Delta_{log} = \frac{(\vartheta_{VL} - \vartheta_{RL})}{ln\left(\frac{\vartheta_{VL} - \vartheta_{Raum}}{\vartheta_{RL} - \vartheta_{Raum}}\right)}$$

$$\vartheta_x - \vartheta_{Raum} = (\vartheta_{VL} - \vartheta_{Raum}) \cdot e^{\left[\frac{\dot{m}_N}{\dot{m}} \cdot ln\left(\frac{(\vartheta_{RL} - \vartheta_{Raum})_N}{(\vartheta_{VL} - \vartheta_{Raum})_N}\right)\right] \cdot x}$$

$$\vartheta_x - \vartheta_{Raum} = (\vartheta_{VL} - \vartheta_{Raum}) \cdot \left(\frac{(\vartheta_{RL} - \vartheta_{Raum})_N}{(\vartheta_{VL} - \vartheta_{Raum})_N}\right)^{\frac{\dot{m}_N}{\dot{m}} \cdot x}$$

und somit für x=1:

$$\vartheta_{RL} - \vartheta_{Raum} = (\vartheta_{VL} - \vartheta_{Raum}) \cdot \left(\frac{(\vartheta_{RL} - \vartheta_{Raum})_N}{(\vartheta_{VL} - \vartheta_{Raum})_N}\right)^{\frac{\dot{m}_N}{\dot{m}}}$$

mit:

$\dot{m}_N$          Heizmediumstrom bei der Referenzmessung

$(\vartheta_{VL} - \vartheta_{Raum})_N$     Vorlaufübertemperatur bei der Referenzmessung

$(\vartheta_{RL} - \vartheta_{Raum})_N$     Rücklaufübertemperatur bei der Referenzmessung

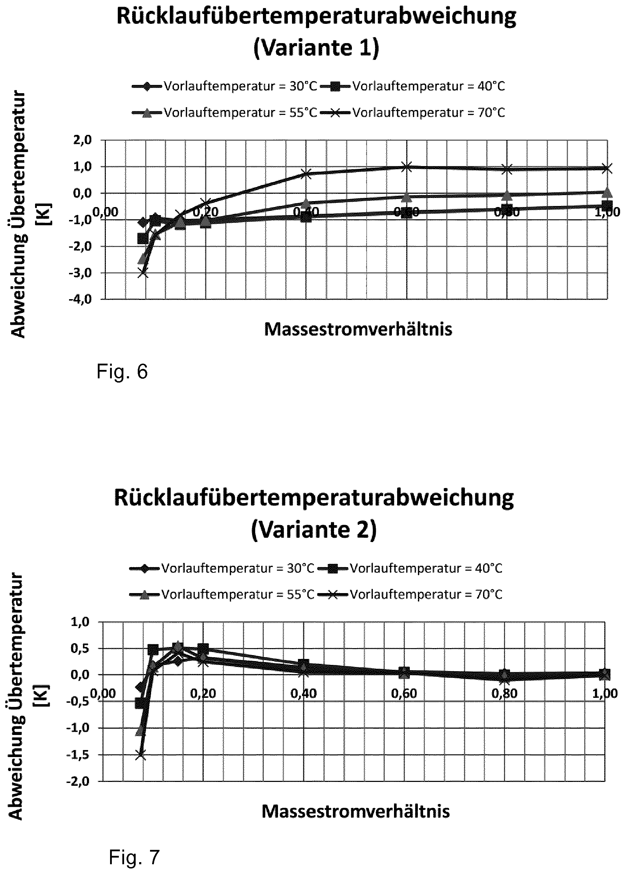

Mit diesen Gleichungen kann die charakteristische Heizkörpertemperatur $\vartheta_{RL}$ oder eine Oberflächentemperatur an einer geeigneten Stelle $\vartheta_x$ bestimmt werden. In Figur 6 ist die Genauigkeit der Rücklauftemperaturberechnung bzw. Rücklaufübertemperaturermittlung als Abweichung der wie vorsstehend ermittelten Rücklaufübertemperatur $\vartheta_{RL} - \vartheta_{Raum}$ zu gemessenen Werten darstellt.

Es ist nun bekannt, dass die in diesem Ansatz (konstanter äußerer Wärmeübergang) enthaltene bzw. sich ergebende Gleichung für die abgegebene Leistung

$$\dot{Q} = k_1 \cdot A \cdot \Delta_{log} = \frac{\dot{Q}_N}{\Delta_{log,N}} \cdot \Delta_{log}$$

für übliche und bekannte Heizkörper so nicht exakt der Realität entspricht. Vielmehr ist der Fachwelt bekannt, die Heizkörperleistung zu bestimmen mit:

$$\dot{Q} = k_2 \cdot A \cdot \left(\Delta_{log}\right)^n = \dot{Q}_N \cdot \left(\frac{\Delta_{log}}{\Delta_{log,N}}\right)^n$$

Dies hat sich beispielsweise in der Norm DIN EN 442 für Heizkörper niedergeschlagen. Die erste der beiden Gleichungen stimmt nur für einen gedachten Heizkörper mit einem Heizkörperexponenten von $n = 1$, reale Werte liegen meist zwischen $n = 1,2 \ldots 1,6$. Das liegt daran, dass der äußere Wärmeübergang in Wirklichkeit nicht konstant, sondern vorwiegend aufgrund freier Konvektionsströmung temperaturabhängig ist.

Versucht man daher, die Berechnung der charakteristischen Heizkörpertemperatur zu verbessern, indem man zwar die oben hergeleitete Gleichung für konstanten äußeren Wärmeübergang $n = 1$ verwendet, jedoch für die Einführung der Kennwerte aus der Referenzmessung die Gleichung

$$\dot{Q} = k_2 \cdot A \cdot \left(\Delta_{log}\right)^n$$

heranzieht, so ergeben sich allerdings für die Berechnung der Rücklauftemperatur die identischen Gleichungen.

Zweite Variante für Verfahrensschritt 3

Als zweite Möglichkeit wird nachfolgend angegeben, wie die Temperaturabhängigkeit des äußeren Wärmeübergangs konsistent sowohl für das Temperaturprofil als auch für die Berechnung der Wärmeleistung berücksichtigt werden kann und so eine besonders genaue Rücklauf- oder Heizkörpertemperatur berechnet werden kann.

Bei Ansatz eines temperaturabhängigen Wärmeübergangsbeiwerts $\alpha_K$ für eine freie Konvektion an ebenen senkrechten Wänden und laminarer oder turbulenter Strömung

$$\alpha_K(x) = C_{spez} \cdot (\vartheta_x - \vartheta_{Raum})^{\beta}$$

mit

$\alpha_K(x)$   Wärmeübergangsbeiwert an einer Stelle x
$C_{spez}$   Stoffwertabhängige Konstante
$\vartheta_x$   Temperatur der Heizkörperoberfläche an einer Stelle x
$\beta$

$$\beta = \frac{1}{4}\,(laminar), \frac{1}{3}\,(turbulent)$$

Übergangsexponent, zB.:

ergibt sich die folgende differenzielle Wärmebilanz am Heizkörper

$$d\dot{Q} = -\dot{m} \cdot c_p \cdot d(\vartheta_x - \vartheta_{Raum}) = k_3 \cdot A \cdot (\vartheta_x - \vartheta_{Raum})^{1+\beta} \cdot dx.$$

Dies führt nach Integration und Einsetzen der Randbedingungen zu der Gleichung für den Temperaturverlauf

$$(\vartheta_x - \vartheta_{Raum}) = \left(\beta \cdot \left(\frac{k_3 \cdot A}{\dot{m} \cdot c_p}\right) \cdot x + (\vartheta_{VL} - \vartheta_{Raum})^{-\beta}\right)^{-\frac{1}{\beta}}$$

und für die Rücklauftemperatur (respektive Rücklaufübertemperatur) mit *x=1* zu

$$(\vartheta_{RL} - \vartheta_{Raum}) = \left((\vartheta_{VL} - \vartheta_{Raum})^{-\beta} + \beta \cdot \left(\frac{k_3 \cdot A}{\dot{m} \cdot c_p}\right)\right)^{-\frac{1}{\beta}}$$

Man kann zeigen, dass unter Verwendung der Messwerte aus einer Referenzmessung für einen Heizkörper mit bekanntem Heizkörperexponent *n* unter der Annahme $\overline{\beta} = n - 1$ gilt:

$$(\vartheta_{RL} - \vartheta_{Raum})^{1-n} = (\vartheta_{VL} - \vartheta_{Raum})^{1-n} + \left((\vartheta_{RL} - \vartheta_{Raum})_N{}^{1-n} - (\vartheta_{VL} - \vartheta_{Raum})_N{}^{1-n}\right) \cdot \frac{\dot{m}_N}{\dot{m}}$$

$$\vartheta_{RL} = \vartheta_{Raum} + \left((\vartheta_{VL} - \vartheta_{Raum})^{1-n} + \left((\vartheta_{RL} - \vartheta_{Raum})_N{}^{1-n} - (\vartheta_{VL} - \vartheta_{Raum})_N{}^{1-n}\right) \cdot \frac{\dot{m}_N}{\dot{m}}\right)^{\frac{1}{n-1}}$$

mit

$n$   Heizkörperexponent mittlerer konvektiver Übergangsexponent
$\overline{\beta} = n - 1$

(fortgesetzt)

| $\vartheta_{VL,N}$ | Vorlauftemperatur bei der Referenzleistungsmessung |
| $\vartheta_{RL,N}$ | Rücklauftemperatur bei der Referenzleistungsmessung |
| $\vartheta_{Raum,N}$ | Raumtemperatur bei der Referenzleistungsmessung |

Dieses Verfahren liefert einen äußerst genauen Wert für die Rücklauftemperatur, wie Figur 7 in Vergleich zu Figur 6 bei Darstellung der ansonsten gleichen Werte zeigt.

Dritte Variante für Verfahrensschritt 3

Eine dritte, allgemeinere Möglichkeit zur Berechnung der Rücklauftemperatur $\vartheta_{RL}$ besteht darin, für spezifische Heizkörper, Heizkörperbauarten oder -gruppen oder beispielhaft an geeigneten Wärmetauschern verschiedene Betriebszustände einzustellen und jeweils die Größen Vorlauftemperatur $\vartheta_{VL}$, Rücklauftemperatur $\vartheta_{RL}$, Raumtemperatur $\vartheta_{Raum}$ und Heizmediumstrom $\dot{m}$ auf einem Prüfstand zu messen.

Aus den Messergebnissen ($\vartheta_{RL,i}$; $\vartheta_{Raum,i}$; $\vartheta_{VL,i}$; $\dot{m}_i$) bei i Messungen kann in Kenntnis des Heizmediumstroms $\dot{m}$ bei der Referenzleistungsmessung $\dot{m}_N$ dann einmal vorab die Rücklauftemperatur $\vartheta_{RL}$ als Funktion $f$ der Größen Vorlauftemperatur $\vartheta_{VL}$, Raumtemperatur $\vartheta_{Raum}$ und relativem Heizmediumstrom $\dfrac{\dot{m}}{\dot{m}_N}$ nume-risch bestimmt werden:

$$\vartheta_{RL} = f\left(\vartheta_{Raum}, \vartheta_{VL}, \frac{\dot{m}}{\dot{m}_N}\right)$$

Das kann beispielsweise durch Approximation, bilineare oder höherpolynomiale Interpolation oder geeignete andere funktionale Ansätze mit den Messdatensätzen ($\vartheta_{RL,i}, \vartheta_{Raum,i}, \vartheta_{VL,i}, \dfrac{\dot{m}_i}{\dot{m}_N}$) geschehen. Ein möglicher Ansatz ist beispielsweise:

$$\vartheta_{RL} - \vartheta_{Raum} = d_n(\vartheta_{VL}) \cdot \left(\frac{\dot{m}}{\dot{m}_N}\right)^n + \cdots + d_2(\vartheta_{VL}) \cdot \left(\frac{\dot{m}}{\dot{m}_N}\right)^2 d_2 \cdot h^2 + d_1(\vartheta_{VL}) \cdot \left(\frac{\dot{m}}{\dot{m}_N}\right)$$

$$+ d_0$$

Wenn diese Funktion $f\left(\vartheta_{Raum}, \vartheta_{VL}, \dfrac{\dot{m}}{\dot{m}_N}\right)$ einmal vorab unter der auf dem Prüfstand bestimmten Messung ermittelt ist, lässt sich auch hieraus die Rücklauftemperatur $\vartheta_{RL}$ ermitteln.

Verfahrensschritt 4

Nachdem in dem vorstehend beschriebenen Verfahrensschritt 3, bspw. nach einer der vorstehenden Varianten, ein Näherungswert für die Rücklauftemperatur $\vartheta_{RL}$ ermittelt wurde, kann die Wärmeabgabe des Heizkörpers, also die aktuelle Heizkörperleistung, nun im Verfahrensschritt 4 bestimmt werden. Für die Bestimmung liegen die Größen Vorlauftemperatur $\vartheta_{VL}$, Raumlufttemperatur $\vartheta_{Raum}$, Heizmediumstrom $\dot{m}$ und Rücklauftemperatur $\vartheta_{RL}$ vor, sowie aus den bekannten Heizkörperdaten die Heizkörperreferenzleistung $\dot{Q}_N$, der Referenz-Heizmediumstrom $\dot{m}_N$ und der Heizkörperexponent $n$ oder ein Näherungswert $y$ für den Heizköperexponenten $n$.

Erste Variante für Verfahrensschritt 4

Die erste Möglichkeit für die Bestimmung der Wärmeabgabe ist die klassische Wärmebilanz, wie sie auch in Wärmezählern angewendet wird:

$$\dot{Q} = \dot{m} \cdot c_p \cdot (\vartheta_{VL} - \vartheta_{RL})$$

In relativer Schreibweise ergibt sich:

$$\frac{\dot{Q}}{\dot{Q}_N} = \frac{\dot{m} \cdot c_p \cdot (\vartheta_{VL} - \vartheta_{RL})}{\dot{m}_N \cdot c_p \cdot (\vartheta_{VL} - \vartheta_{RL})_N} = \frac{\dot{m} \cdot (\vartheta_{VL} - \vartheta_{RL})}{\dot{m}_N \cdot (\vartheta_{VL} - \vartheta_{RL})_N}$$

Zweite Variante für Verfahrensschritt 4

In einer zweiten Variante wird die abgegebene Wärmemenge entsprechend dem 3-Fühler-Verfahren mit der logarithmische Übertemperatur bestimmt.

$$\dot{Q} = \dot{Q}_N \cdot \left( \frac{\Delta_{log}}{\Delta_{log,N}} \right)^n$$

Mit den vorliegenden Größen, inklusive der mittels eines der beschriebenen Verfahren gemäß Verfahrensschritt 3 ermittelten Rücklauftemperatur $\vartheta_{RL}$, kann die logarithmische Übertemperatur berechnet und das bekannte 3-Fühler-Verfahren ausgeführt werden:

$$\dot{Q} = \dot{Q}_N \left( \frac{1}{\Delta_{log,N}} \right)^y \cdot \left( \frac{(\vartheta_{VL} - \vartheta_{RL})}{ln\left(\frac{\vartheta_{VL} - \vartheta_{Raum}}{\vartheta_{RL} - \vartheta_{Raum}}\right)} \right)^y =$$

$$\dot{Q}_N \cdot \left( \frac{ln\left(\frac{\vartheta_{VL} - \vartheta_{Raum}}{\vartheta_{RL} - \vartheta_{Raum}}\right)_N}{(\vartheta_{VL} - \vartheta_{RL})_N} \right)^y \cdot \left( \frac{(\vartheta_{VL} - \vartheta_{RL})}{ln\left(\frac{\vartheta_{VL} - \vartheta_{Raum}}{\vartheta_{RL} - \vartheta_{Raum}}\right)} \right)^y$$

Dritte Variante für Verfahrensschritt 4

Erfindungsgemäß ist grundsätzlich auch die Verwendung einer arithmetisch gemittelten Übertemperatur möglich, so dass die Berechnungsgleichung lautet:

$$\dot{Q} = \dot{Q}_N \cdot \left( \frac{\frac{(\vartheta_{VL} + \vartheta_{RL})}{2} - \vartheta_{Raum}}{\frac{(\vartheta_{VL,N} + \vartheta_{RL,N})}{2} - \vartheta_{Raum,N}} \right)^y$$

Das durch die vorstehende Gleichung beschriebene Betriebsverhalten entspricht einem 2-Fühler-Heizkostenverteiler, der in halber Bauhöhe auf dem Heizkörper montiert ist.
Um ein Betriebsverhalten zu beschreiben, das dem eines in üblicher Position bei z.B. 75% der Heizkörperbauhöhe $H$ (beschrieben als $x = X/H = 0{,}25$) montierten 2-Fühler-Heizkostenverteilers entspricht, kann zunächst die Heizkörper(oberflächen)temperatur $\vartheta_x$ an dieser Position berechnet und dann in die Berechnungsgleichung für die Heizkörperleistung eingesetzt werden. Ein geeigneter Ansatz hierfür ist der Temperaturverlauf bei konstantem Wärme-übergangsbeiwert auf der Heizkörperoberfläche ($\alpha_K(x) = \alpha_K = konst$).
Entsprechend der aus dem Ansatz mit dem konstanten äußeren Wärmeübergang abgeleiteten Beziehung gilt auch:

$$\vartheta_x - \vartheta_{Raum} = (\vartheta_{VL} - \vartheta_{Raum})^x (\vartheta_{RL} - \vartheta_{Raum})^{1-x}$$

Somit gilt für den Wert $x = 0{,}25$ die Beziehung

$$\vartheta_{0,25} - \vartheta_{Raum} = (\vartheta_{VL} - \vartheta_{Raum})^{0,25}(\vartheta_{RL} - \vartheta_{Raum})^{0,75}.$$

Daraus folgt für die Wärmeleistung

$$\dot{Q} = \dot{Q}_N \cdot \frac{\left(\vartheta_{0,25} - \vartheta_{Raum}\right)^y}{\left(\vartheta_{0,25,N} - \vartheta_{Raum,N}\right)^y}.$$

In dieser Variante reicht es also, anstelle der Rücklauftemperatur $\vartheta_{RL}$, die sich wie beschrieben für den Wert $x = 1$ ergibt, nur die Heizkörperoberflächentemperatur $\vartheta_x$ zu bestimmen.

Vierte Variante für Verfahrensschritt 4

Der Temperaturverlauf, der sich unter der Annahme eines temperaturabhängigen und damit veränderlichen Wärmeübergangs auf dem Heizkörper ergibt, liefert wie beschrieben eine Rücklauftemperatur $\vartheta_{RL}$ oder auch charakteristische Heizkörpertemperatur $\vartheta_x$ mit höherer Genauigkeit.

Grundsätzlich ist es möglich und zielführend, auch den so ermittelten Wert für eine der vorgenannten Gleichungen, wie beispielsweise mit der logarithmischen Übertemperatur, zu verwenden und so die Genauigkeit der Wärmeleistungsbestimmung zu erhöhen.

Eine nochmals verbesserte Genauigkeit liefert konsequenterweise die Integration des Wärmeinkrements aus dem temperaturabhängigen Ansatz selbst. Dieses ergibt nämlich eine direkte Berechnungsgleichung für die Heizkörperleistung:

Aus

$$\dot{Q} = \int d\dot{Q} = \int k_3 \cdot A \cdot (\vartheta_x - \vartheta_{Raum})^{1+\beta} \cdot dx$$

folgt dann letztlich:

$$\dot{Q} = \dot{Q}_N \cdot \frac{\left(\dfrac{\vartheta_{RL} - \vartheta_{VL}}{(\vartheta_{RL} - \vartheta_{Raum})^{1-y} - (\vartheta_{VL} - \vartheta_{Raum})^{1-y}}\right)}{\left(\dfrac{\vartheta_{RL} - \vartheta_{VL}}{(\vartheta_{RL} - \vartheta_{Raum})^{1-y} - (\vartheta_{VL} - \vartheta_{Raum})^{1-y}}\right)_N}$$

Zusammenfassung von Verfahrensschritten

Betrachtet man die Gleichungen von Verfahrensschritt 2 (Bestimmung von Heizmediumstrom $\dot{m}$ aus dem Hub $h$), Verfahrensschritt 3 (Ermittlung der Rücklauftemperatur $\vartheta_{RL}$ oder einer chrakteristischen Heizkörpertemperatur $\vartheta_x$ aus den Messwerten Vorlauftemperatur $\vartheta_{VL}$, Raumtemperatur $\vartheta_{Raum}$ und Heizmediumstrom $\dot{m}$) und Verfahrensschritt 4 (Bestimmung der Heizkörperleistung $\dot{Q}$ aus den gemessenen und/oder in den vorangehenden Verfahrensschritten ermittelten Temperaturwerten) so stellt man fest, dass die Gleichungen bezüglich der Unbekannten $\dot{m}$, $\vartheta_{RL}$, $\dot{Q}$ vollständig entkoppelt sind.

Daher können die Schritte sowohl nacheinander ausgeführt werden, als auch ohne weiteres jeweils zu zwei Schritten oder sogar zu einem einzigen Gesamtschritt zusammengefasst werden.

Dies wird nachfolgend beispielhaft für verschiedene Varianten beschrieben:

Zusammenfassung von Verfahrensschritten 3 und 4

Setzt man die Bestimmungsgleichung für die Rücklauftemperatur (Variante 1 des Verfahrensschritts 3) direkt in die Bestimmungsgleichung für die Wärmeangabe gemäß Wärmebilanz (Variante 1 des Verfahrensschritts 4) ein, so ergibt sich:

$$\frac{\dot{Q}}{\dot{Q}_N} = \frac{\frac{\dot{m}}{\dot{m}_N}}{(\vartheta_{VL} - \vartheta_{RL})_N} \cdot (\vartheta_{VL} - \vartheta_{Raum})\left(1 - \left(\frac{(\vartheta_{RL} - \vartheta_{Raum})}{(\vartheta_{VL} - \vartheta_{Raum})}\right)_N^{\frac{\dot{m}_N}{\dot{m}}}\right)$$

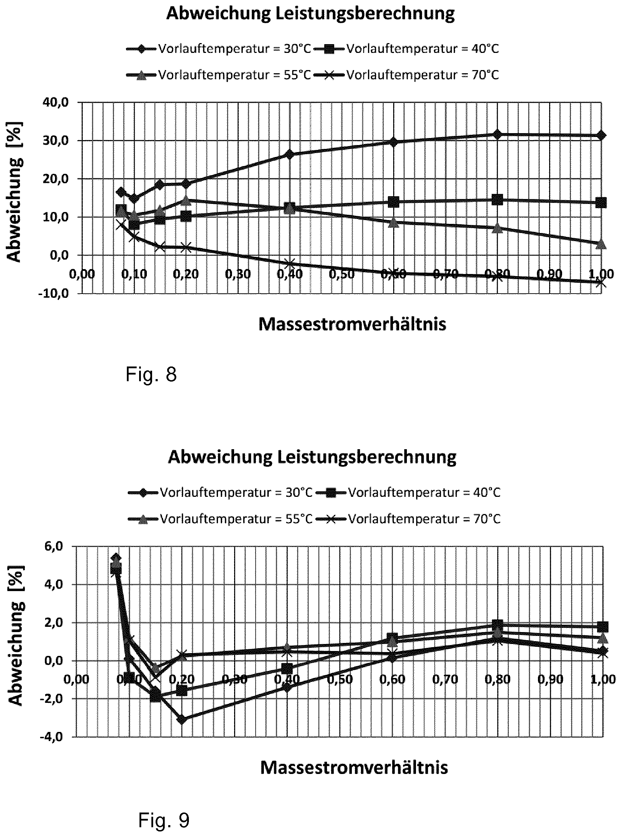

Figur 8 zeigt die Genauigkeit der so berechneten Heizkörperleistung in Abweichung zu gemessenen Werten.

Setzt man die Bestimmungsgleichung für die Rücklauftemperatur (Variante 2 des Verfahrensschritts 3) in die Bestimmungsgleichung für die Wärmeangabe gemäß Wärmebilanz (Variante 1 des Verfahrensschritts 4) oder für das alternative Verfahren (Variante 4 des Verfahrensschritts 4) ein, so ergibt sich in beiden Fällen für die Leistungsberechnung:

$$\frac{\dot{Q}}{\dot{Q}_N} = \frac{\frac{\dot{m}}{\dot{m}_N}}{(\vartheta_{VL} - \vartheta_{RL})_N}$$

$$\cdot \Bigg( (\vartheta_{VL} - \vartheta_{Raum})$$

$$- \Bigg( \left( (\vartheta_{VL} - \vartheta_{Raum})^{1-y} + ((\vartheta_{RL} - \vartheta_{Raum})^{1-y} - (\vartheta_{VL} - \vartheta_{Raum})^{1-y})_N \right.$$

$$\left. \cdot \frac{\dot{m}_N}{\dot{m}} \right)^{\frac{1}{1-y}} \Bigg) \Bigg)$$

Figur 8 zeigt die Genauigkeit der so berechneten Heizkörperleistung in Abweichung zu gemessenen Werten.

<u>Zusammenfassung von Verfahrensschritten 2, 3 und 4</u>

Da die Ermittlung des Heizmediumstroms aus dem Hub (Verfahrensschritt 2) von den Verfahrensschritten 3 und 4 rechnerisch entkoppelt ist, können auch alle drei Verfahrenschritte 2, 3 und 4 zu einem Schritt zusammengefasst werden.

Nachfolgend wird anhand eines konkreten Zahlenbeispiels die direkte Gleichung für die Heizkörperleistung $\dot{Q} = \dot{Q}(h, \vartheta_{VL}, \vartheta_{Raum})$ als Funktion der Messwerte Ventilhub $h$, Vorlauftemperatur $\vartheta_{VL}$ und Raumtemperatur $\vartheta_{Raum}$ angegeben für ein hochwertiges Ventil mit linearer Kennlinie und ohne Leckage unter Verwendung der Gleichungen für den variablen Wärmeübergang (Variante 2 des Verfahrensschritts 3 zur Bestimmung der Rücklauftemperatur und Variante 4 des Verfahrensschritts 4 zur Ermittlung der Wärmeabgabe).

Dabei wird von einem linearen Ventil, ohne Leckage mit den folgenden Ventilkennwerten ausgegangen:

- keine Leckage $\dot{m}_0 = 0$
- Mit Voreinstellung $i$ eingestellter Maximalvolumenstrom $\dot{m}_{max,i} = 60$ *kg/h*
- Maximalhub $h_{max} = 1$ *mm*

Für die Heizkörperkennwerte wird von die folgenden Werten ausgegangen:

- Referenzmessung bei Bedingungen gemäß EN 834
- mit $\vartheta_{VL} = 90°$, $\vartheta_{RL} = 70°$, $\vartheta_{Raum} = 20°$
- Heizkörperexponent n = 1,3 (bzw. Geräteexponent y = 1,3)
- Referenzleistung $\dot{Q}_N = 1000W$
- Referenzmedienstrom $\dot{m}_N = 43$ kg/h

Mit diesen Werten folgt für den Heizmediumstrom $\dot{m}$ bzw. den relativen Heizmediumstrom $\frac{\dot{m}}{\dot{m}_N}$ :

$$\dot{m} = \frac{\dot{m}_{max,i}}{h_{max}} \cdot h = \frac{h}{h_{max}} \cdot \dot{m}_{max,i} = h \cdot 60 \frac{kg}{h \cdot mm}$$

$$\frac{\dot{m}}{\dot{m}_N} = \frac{\dot{m}_{max,i}}{\dot{m}_N \cdot h_{max}} \cdot h = \frac{h}{h_{max}} \cdot \frac{\dot{m}_{max,i}}{\dot{m}_N} = h \cdot \frac{60}{43} mm^{-1}$$

und für die Wärmeleistung:

$$\frac{\dot{Q}}{\dot{Q}_N} = \frac{\frac{\dot{m}}{\dot{m}_N}}{(\vartheta_{VL} - \vartheta_{RL})_N}$$

$$\cdot \left( (\vartheta_{VL} - \vartheta_{Raum}) \right.$$

$$- \left( \left( (\vartheta_{VL} - \vartheta_{Raum})^{1-y} + ((\vartheta_{RL} - \vartheta_{Raum})^{1-y} - (\vartheta_{VL} - \vartheta_{Raum})^{1-y})_N \right. \right.$$

$$\left. \left. \left. \cdot \frac{\dot{m}_N}{\dot{m}} \right)^{\frac{1}{1-y}} \right) \right)$$

Anhand eines konkreten Zahlenbeispiels ergibt sich folgendes:

$$\frac{\dot{Q}}{1000W} = \frac{60 \cdot h}{43 \cdot 20}$$

$$\cdot \left( (\vartheta_{VL} - \vartheta_{Raum}) - \left( \left( (\vartheta_{VL} - \vartheta_{Raum})^{-0,3} + (50^{-0,3} - 70^{-0,3}) \cdot \frac{43}{60 \cdot h} \right)^{\frac{1}{-0,3}} \right) \right)$$

$$\dot{Q} = 1000W \cdot 0,06977 \cdot h \cdot \left( (\vartheta_{VL} - \vartheta_{Raum}) - \left( \left( (\vartheta_{VL} - \vartheta_{Raum})^{-0,3} + \frac{0,02128}{h} \right)^{\frac{1}{-0,3}} \right) \right)$$

Die Bestimmung der Rücklauftemperatur, ggf. der weiteren charakteristischen Heizkörpertemperatur und der abgegebenen Wärmemenge stellt in jedem Fall einen Näherungswert dar, der entsprechend für eine Heizkostenverteilung nutzbar ist, aber keine Wärmemengenmessung als solche darstellt.

Das vorbeschriebene Verfahren kann insbesondere in der Recheneinheit eines Heizkostenverteilers eingerichtet sein. Gegenstand der Erfindung ist jedoch auch das vorbeschriebene Verfahren, unabhängig von einer Umsetzung in einem Heizkostenverteiler.

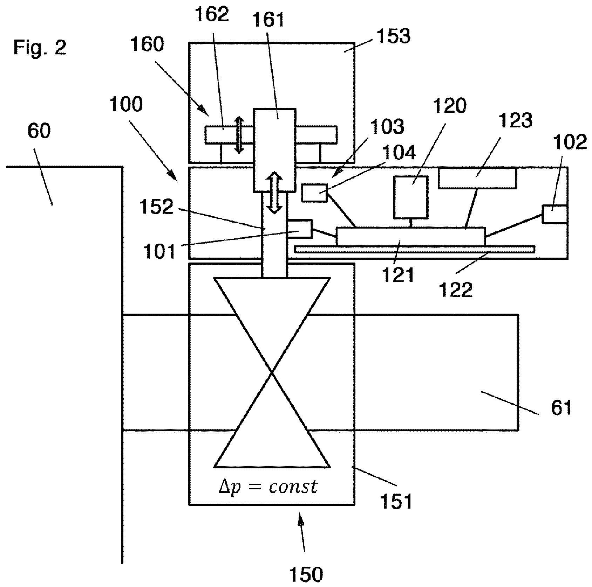

Mit Bezug auf die Fig. 2 bis 4 werden nachfolgend noch konkrete Ausführungsformen des erfindungsgemäß vorgeschlagenen Heizkostenverteilers beschrieben.

Figur 2 zeigt schematisch eine Ausführungsform eines erfindungsgemäßen Heizkostenverteilers 100 mit einem Heizkörperregelventil 150.

Das Heizkörperregelventil 150 weist erfindungsgemäß ein dynamisches Ventilunterteil 151 auf, das die Druckdifferenz $\Delta p$ eines Heizmediums über dem Heizkörperregelventil 150 konstant hält, unabhängig von dem Heizmediumstrom $\dot{m}$, der durch das Heizkörperregelventil 150 strömt. Derartige Ventile mit dynamischen Ventilunterteilen sind im Stand der Technik bekannt. Das Heizkörperregelventil 150 ist bei dem dargestellten Beispiel in dem auch als Vorlaufanschluss bezeichneten Zulaufanschluss 61 eines Heizkörpers 60 angeordnet.

Das Einstellen des Heizmediumstroms $\dot{m}$ erfolgt über einen Ventilstößel 152, der durch einen Thermostatkopf 153 des Heizkörperregelventils 150 entsprechend der einzuregelnden Raumtemperatur in dem Ventilunterteil 151 in bekannter Weise verschoben wird, um den Ventildurchfluss zu verändern. Dazu weist der Thermostatkopf 153 eine Mimik 160 auf, die im Falle eines hier dargestellten konventionellen mechanischen Thermostatkopfs 153 eine Gas-, Wachs-, Flüssigkeitspatrone 161 oder dergleichen Einrichtung aufweist, die ihre Ausdehnung temperaturabhängig verändert und mit dem Ventilstößel 152 in Verbindung steht, so dass sie den Ventilstößel 152 temperaturabhängig verstellt. Die Gas-, Wachs-, Flüssigkeitspatrone 161 selbst kann durch eine Temperaturwahleinrichtung 162 mechanisch verstellt werden, um bspw. durch Drehen des Thermostatkopfs 153 in bekannter Weise eine gewünschte Raumtemperatur vorzuwählen.

Im Bereich des konventionellen Thermostatkopfs 153 und des auch als Ventilgehäuse bezeichneten Ventilunterteils 151 am Zulaufanschluss 61 des Heizkörpers 60 ist gemäß dieser Ausführungsform erfindungsgemäß der Heizkostenverteiler 100 befestigt. In dem dargestellten Beispiel ist der Heizkostenverteiler 100 zwischen dem Ventilunterteil 151 und dem Thermostatkopf 153 derart aufgenommen, dass der Ventilstößel 152 durch den Heizkostenverteiler 100 verläuft. Auch wenn dies eine bevorzugte Anordnung ist, weil so die Ventilhubstellung $h$ unmittelbar in dem Heizkostenverteiler 100 gemessen werden kann, sind auch andere Anordnungen denkbar, bspw. mit einem externen Positionssensor oder einem in das Heizkörperregelventil integrierten Positionssensor, der bspw. über eine Schnittstelle betrieben (d.h. mit Energie versorgt und abgelesen) wird.

Im Innern des Heizkostenverteilers 100 befinden sich eine Energieversorgung 120 (Spannungsversorgung) und eine Recheneinheit 121 (bspw. in Form eines als Mikrocontroller ausgebildeten Prozessors), der vorzugsweise auf einer Platine 122 angeordnet ist, die weitere elektronische Bauteilen aufweisen kann. Die Energieversorgung 120 ist vorzugsweise durch eine Batterie gebildet, deren Batterielebensdauer die üblichen Einsatzzeiten von Heizkostenverteilern von mehr als 10 Jahren erreicht und für den Benutzer nicht beschädigungsfrei zugänglich und daher nicht austauschbar ist. Dies soll Manipulationen vorbeugen. Die Recheneinheit 121 ist zur Durchführung des vorbeschriebenen Verfahrens oder Teilen hiervon eingerichtet, um die Wärmemengenabgabe $\Delta Q$ durch den Heizkörper 60 zu erfassen. Zur Anzeige der abgegebenen Wärmemenge $\Delta Q$ ist in dem Heizkostenverteiler 100 eine Anzeigevorrichtung 123 vorgesehen, die bspw. in die Gehäusewand des Heizkostenverteilers 100 integriert ist, um ein Ablesen von erfassten Wärmemengenabgabe $\Delta Q$ und/oder anderer Mess- oder Auswertedaten zu ermöglichen. Die Anzeigevorrichtung 123 kann bspw. ein LC-Display (LCD) sein.

Ferner kann der Heizkostenverteiler 100 (wie auch alle weiteren beschriebenen Heizkostenverteiler) eine nicht dargestellte Funkkommunikationseinheit zur Kommunikation in einem lokalen Gebäudenetzwerk zur Verbrauchskostenablesung und/oder zur Fernkommunikation mit einem Verbrauchsdienstleister, bspw. mittels Mobilfunkkommunikation, aufweisen.

Für die Ausführung des erfindungsgemäß vorgeschlagenen Verfahrens weist der Heizkostenverteiler 100 darüber hinaus einen Vorlauftemperatursensor 101 zur Messung der Vorlauftemperatur $\vartheta_{VL}$ des Wärmeträgermediums, einen Raumlufttemperatursensor 102 zur Messung der Raumlauftemperatur $\vartheta_{Raum}$ und eine Einrichtung 103 zur Ermittlung einer Ventilhubstellung $h$ des Heizkörperregelventils 150 auf. Der Raumlufttemperatursensor 102 weist vorzugsweise einen an der Gehäusevorderseite innen angeordneten Fühler auf. Der Vorlautemperatursensor 101 kann bspw. einen kabelgebundenen Anlegefühler am Ventilgehäuse (d.h. dem Ventilunterteil 151) oder einen an dem Ventilstößel 152 angeordneten Fühler, wie in Fig. 2 dargestellt, aufweisen. Die Einrichtung 103 zur Ermittlung der Ventilhubstellung $h$ misst mit einem Positionssensor 104 den Hub $h$ des Ventilstößels 152, der vom Thermostatkopf 153 eingestellt wurde.

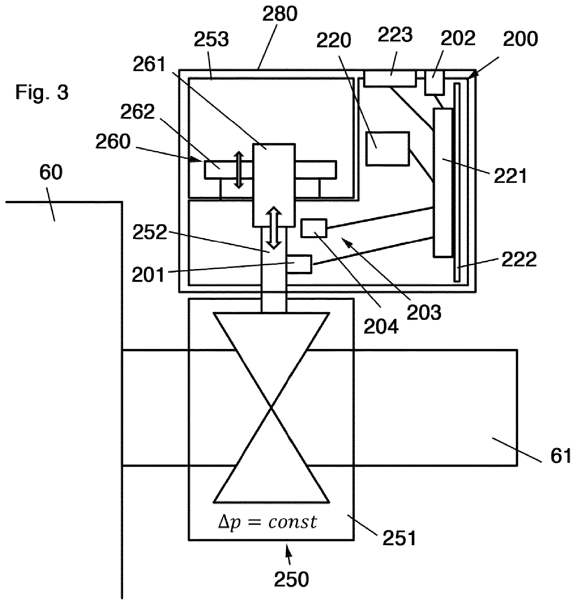

Fig. 3 stellt eine Variante des in Fig. 2 beschriebenen Heizkostenverteilers 100 mit Heizkörperregelventil 150 dar, für den die obenstehende Beschreibung der einzelnen Komponenten in vergleichbarer Weise gilt.

Die Variante des Heizkostenverteilers 200 mit Heizkörperregelventil 250 weist hinsichtlich Aufbau und Anordnung ein identisches Ventilunterteil 251 mit Ventilstößel 252 auf. Auch der Thermostatkopf 253 und die Mimik 260 aufweisend eine Gas-, Wachs- oder Flüssigkeitspatrone und die Temperaturwahleinrichtung 262 sind grundsätzlich gleich aufgebaut.

Allerdings sind die Komponenten des Heizkostenverteilers 200, d.h. insbesondere der Vorlauftemperatursensor 201, der Raumlufttemperatursensor 202, die Einrichtung 203 zur Ermittlung der Ventilhubstellung $h$ mit dem Positionssensor 204, die Energieversorgung 220 des Heizkostenverteilers 200, die Recheneinheit 221, die Platine 222 und die Anzeigevorrichtung 223, derart angeordnet, dass der Heizkostenverteiler 200 und der Thermostatkopf 253 in einem gemeinsamen Gehäuse 280 angeordnet sind.

Anders als in Fig. 3 aus Gründen der Übersichtlichkeit wiedergegeben, ist das Gehäuse 280 vorzugsweise rotationssymmetrisch um den Ventilstößel 252 aufgebaut, damit der mechanische Thermostatkopf 253 zur Einstellung der gewünschten Raumtemperatur in üblicher Weise verstellt werden kann.

Der Vorteil dieser integrierten Aufbaualternative ist ein kompakter und ästhetisch ansprechender Aufbau, gerade bei dieser Bauform insbesondere ohne drahtgebundene separate Fühler.

Vorteilhaft bei den beiden vorbeschriebenen Varianten mit einem mechanisch arbeitenden Thermostatkopf 153, 253 des Heizkörperregelventils 150, 250 ist die fremdenergiefreie Temperaturregelung durch das Heizkörperregelventil 150, 250. Eine Spannungsversorgung (Energieversorgung 120, 220) wird nur für die Mess-, Rechen-, Kommunikations- und Anzeigefunktionen durch den Heizkostenverteiler 100, 200 benötigt und verwendet. Die Temperaturregelung durch den mechanischen Thermostatkopf 153, 253 kommt ohne Batterie aus.

In einer nicht graphisch dargestellten Variante der Ausführungsformen gemäß Fig. 2 und Fig. 3 kann die Mimik 160, 260 des mechanischen Thermostatkopfs 153, 253 mit einem elektrischen Sollwertverstellantrieb kombiniert werden. Während die Raumtemperaturregelung auf den vorgegebenen Sollwert weiterhin konventionell und fremdenergiefrei erfolgt, verstellt der Sollwertverstellantrieb zu vorgegebenen Zeitpunkten den Sollwert, senkt diesen also beispielsweise bei einer eingestellten Nachtabsenkung ab. Dies kann einfacher Weise durch einen elektromotorischen Stellantrieb für die Temperaturwahleinrichtung 162, 262 erfolgen, der bspw. durch die Recheneinheit 121, 221 des Heizkostenverteilers 100, 200 und deren Energieversorgung 220, 221 mit angesteuert werden kann.

Durch Begrenzung der Stellvorgänge auf z.B. 4 Stellvorgänge pro 24h für zwei Absenkphasen pro Tag ist es möglich, mit vergleichsweise kleiner Batteriekapazität übliche Einsatzdauern von mindestens 10 Jahren für die Heizkostenverteiler 100, 200 zu erreichen, auch wenn deren Energieversorgung mitverwendet wird. Die für die Anzeige der Verbrauchswerte und ggf. sonstiger Werte oder Daten des Heizkostenverteilers 100, 200 vorhandene Anzeigevorrichtung 123 223, welche üblicher Weise auch Funktionstasten bspw. für das Umschalten zur Darstellung verschiedener Daten oder für die Aktivierung der Anzeige aufweist, kann für die Bedienung und Programmierung der Absenkzeitpunkte entsprechend einem Zeitprofil mitverwendet werden.

Durch eine gemeinsame Verwendung der Recheneinheit 121, 221 und der Energieversorgung 120, 220 lässt sich diese reine Absenkfunktion für die Raumtemperatur kostengünstig realisieren.

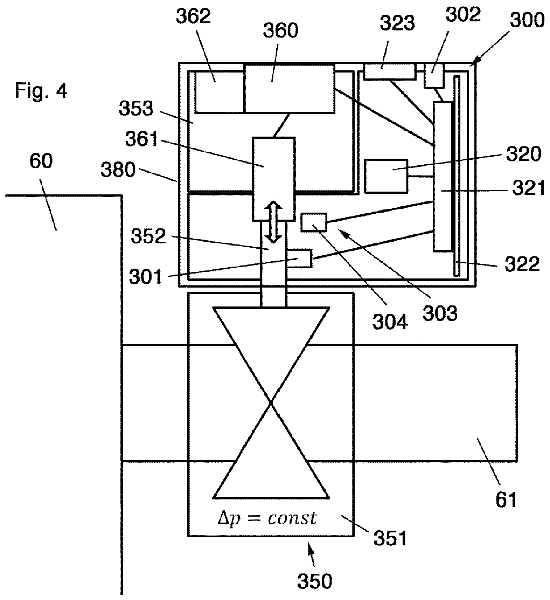

Fig. 4 zeigt schließlich eine weitere Ausführungsform der Erfindung mit einer elektronischen Raumtemperaturregelung in dem Heizkörperregelventil 350.

Der gemäß dieser Ausführungsvariante vorgeschlagene Heizkostenverteiler 300 mit Heizkörperregelventil 350 weist statt eines mechanischen Thermostatkopfs mit dem konventionellen Regeleinsatz (Gas-, Wachs, Flüssigkeitspatrone) einen Thermostatkopf 353 mit einem elektronischen Raumtemperaturregler 360 mit Stellantrieb 361 auf, der die Mimik 160, 260 des mechanischen Thermostatkopfs 153, 253 der vorherigen Ausführungsformen ersetzt.

Ansonsten ist das Heizkörperregelventil 350 mit dem dynamischen Ventilunterteil 351 und dem Ventilstößel 352 vergleichbar aufgebaut. Entsprechendes gilt für den Heizkostenverteiler 300 mit dem Vorlauftemperatursensor 301, dem Raumlufttemperatursensor 302, der Einrichtung 303 zur Ermittlung der Ventilhubstellung $h$ mit dem Positionssensor 304, die Energieversorgung 320 des Heizkostenverteilers 300, die Recheneinheit 321, die Platine 322 und die Anzeigevorrichtung 323. Vorteilhaft sind auch hier der Heizkostenverteiler 300 und der Thermostatkopf 353 in einem gemeinsamen Gehäuse 380 angeordnet sind.

In der integrierten Bauform besteht als besonders vorteilhafte Ausführung die Möglichkeit, die für den elektronischen Raumtemperaturregler 360 die in dem Heizkostenverteiler 300 vorhandene Einrichtung 303 zur Ermittlung der Ventilhubstellung $h$ mit dem Positionssensor 304 oder eine in dem elektronischen Raumtemperaturregler 360 verwendete Hubsollgröße zu verwenden. Die für die Heizkostenverteiler-Funktion vorhandenen Temperaturfühler (Vorlauftemperaturfühler 301, Raumlufttemperaturfühler 302) können dann gleichermaßen für die Regelfunktion des elektronischen Raumtemperaturreglers 360 verwendet werden. Auch hier ergibt sich ein kompaktes Gerät ohne separate Fühler.

Bei der elektronischen Raumtemperaturregelung 360 ist es ohne weitere Hardware möglich, die üblichen und bekannten Energiespar- und Komfortfunktionen, wie beispielsweise Temperatur-Tages-Zeitprofile oder Fenster-Offen-Reaktion, softwaretechnisch darzustellen.

In einer in Fig. 4 nicht dargestellte Variante ist es möglich, dass der elektronische Raumtemperaturregler 360 mit in die Recheneinheit 321 integriert wird, die dann den Stellantrieb 361 ansteuert. Der höhere Energiebedarf gegenüber dem mechanischen Thermostatkopf kann durch größere Batteriekapazität der Energieversorgung 320, durch wechselbare Batterie bzw. Batterien oder durch Gewinnung von Umgebungsenergie (Energy-Harvesting, z.B. thermisch aus dem Heizmedium oder den Oberflächentemperaturen) gedeckt werden.

Es ist auch möglich und sinnvoll, die Energieversorgung für die Funktionen Heizkörper- bzw. Raumtemperaturregler 360 und Heizkostenverteiler 300 getrennt und unabhängig auszuführen. Der Heizkörper- bzw. Raumtemperaturregler 360 benötigt für die Stellfunktion des Stellantriebs 361 zur Regelung des Heizmediumstroms $\dot{m}$ zeitanteilig kurzzeitig eine relativ hohe Leistung und damit Ströme, kann aber in der heizfreien Betriebszeit mit wenig oder ggf. ganz ohne Energieversorgung auskommen. Der Heizkostenverteiler 300 muss typischerweise über lange Zeiträume dauerhaft aktiv sein, benötigt aber nur eine geringe zugeführte Leistung, so dass ein Betrieb auch inklusive Funkkommunikation über typische Einsatzzeiten von 10 Jahren aus einer relativ kleinen Batterie üblich ist. So kann es sinnvoll sein, den Stellantrieb mit einer Wechselbatterie oder mit Energy-Harvesting (z.B. einem Peltier- Element) zu betreiben, die Heizkostenverteilfunktion und die Kommunikations- und sonstigen Funktionen dagegen aus einer Dauerbatterie.

Die in Fig. 4 dargestellte Variante der Ausführungsform des Heizkostenverteilers 300 mit dem Heizkörperregelventil 350 zeigt einen von der Recheneinheit 321 des Heizkostenverteilers 300 separaten elektronischen Raumtemperaturregler 360, der optional auch eine separate Anzeige- und Bedieneinheit als Anzeigevorrichtung 323 aufweist.

Ferner ist für die Funktionen des Raumtemperaturreglers 360 einschließlich des Betriebs des Stellantriebs 361 eine separate Energieversorgung 362 für das Heizkörperregelventil 350 vorgesehen, die mit für den Benutzer austauschbaren Batterien bestückt ist.

Dabei ist der Heizkostenverteiler 300 mit dem Heizkörperregelventil 350 und dem elektronischen Raumtemperaturregler 360 so vorgesehen, dass der Heizkostenverteiler mit den für die Heizkostenverteilung (wie beschrieben) notwendigen Komponenten in einem gekapselten Teil des Gehäuses (entsprechend der Darstellung des Heizkostenverteilers 350) vorgesehen ist, wobei der gekapselte Teil Bestandteil des gemeinsamen Gehäuses 380 ist. Damit der Raumtemperaturregler 360 Zugriff auf die Daten des Heizkostenverteilers 300, insbesondere die in dem Heizkostenverteiler gemessene Raumlufttemperatur $\vartheta_{RL}$ und die Vorlauftemperatur $\vartheta_{VL}$ sowie ggf. die Ventilhubstellung $h$ hat, ist über eine nicht bezeichnete Schnittstelle eine Kommunikationsverbindung zwischen der Recheneinheit 321 des Heizkostenverteilers 300 und der elektronischen Raumtemperaturregelung 360 des Heizkörperregelventils 350 vorgesehen. Diese erlaubt den mono- oder bidirektionalen Austausch von Daten zwischen dem Heizkörperregelventil 350 und dem Heizkostenverteiler 300, wobei der Heizkostenverteiler auch autark funktionsfähig bleibt und gegen Manipulationen geschützt ist. Ggf. kann in einer solchen Ausführungsform aufgrund einer in den Raumtemperaturregler 360 integrierten Anzeigeeinrichtung auf die Anzeigevorrichtung 323 auch verzichtet werden.

Das durch die Erfindung vorgeschlagene System aus einem kombiniertem Heizkostenverteiler und Heizkörperregelventil (vorzugsweise einschließlich Raumtemperaturregler) erfüllt die regulatorischen Anforderungen (HeizkostenV / EnEV / EED) und ist nach EN 834 zulassungsfähig. Es wird also volle Heizkostenverteilerfunktionalität bei einfacher Handhabbarkeit erreicht, weil das System wie ein konventionelles oder elektronisches Thermostatventil aussieht und verwendetet werden kann. Das System ist aufgrund seines universellen Aufbaus und technischen Konzepts auch für Flächenheizungen, seriell durchströmte mehrlagige Heizkörper sowie Heizkörper mit im Betrieb variablen Kenndaten (z.B. zusätzliche thermostatische oder aufgrund anderer erhobener Messwerte erfolgende Zuschaltung einzelner oder mehrerer Lagen) geeignet.

Bezugszeichenliste:

1 Verfahrensschritt: Messen von Vorlauftemperatur $\vartheta_{VL}$ und Raumlufttemperatur $\vartheta_{Raum}$
2 Verfahrensschritt: Ermitteln des Heizmediumstroms m
3 Verfahrensschritt: Ermitteln einer weiteren charakteristischen Heizkörpertemperatur $\vartheta_{RL}$, $\Delta_{log}$, $\vartheta_x$
4 Verfahrensschritt: Ermitteln der Heizkörperleistung $\Delta Q$

60 Heizkörper
61 Zulaufanschluss

100, 200, 300 Heizkostenverteiler
101, 201, 301 Vorlauftemperatursensor
102, 202, 302 Raumlufttemperatursensor
103, 203, 303 Einrichtung zur Ermittlung der Ventilhubstellung $h$
104, 204, 304 Positionssensor
120, 220, 320 Energieversorgung des Heizkostenverteilers
121, 212, 321 Recheneinheit
122, 222, 322 Platine
123, 223, 323 Anzeigevorrichtung
150, 250, 350 Heizkörperregelventil
151, 251, 351 dynamisches Ventilunterteil
152, 252, 352 Ventilstößel
153, 253, 353 Thermostatkopf
160, 260 Mimik
161, 261 Gas-, Wachs- oder Flüssigkeitspatrone
162, 262 Temperaturwahleinrichtung

280, 380 gemeinsames Gehäuse
360 elektronischer Raumtemperaturregler
361 Stellantrieb
362 separate Energieversorgung

**Patentansprüche**

1. Heizkostenverteiler zur Erfassung der durch einen Heizkörper (60) abgegebenen Wärmemenge ($\Delta Q$)

   - mit einem Vorlauftemperatursensor (101, 201, 301) zur Messung der Vorlauftemperatur ($\vartheta_{VL}$) eines Wärmeträgermediums,
   - mit einem Raumlufttemperatursensor (102, 202, 302) zur Messung der Raumlufttemperatur ($\vartheta_{Raum}$),
   - mit einem Heizkörperregelventil (150, 250, 350),
   - mit einer Einrichtung (103, 203, 303) zur Ermittlung einer Ventilhubstellung (h) des Heizkörperregelventils (150, 250, 350) und
   - mit einer Recheneinheit (121, 221, 321), welche zur Bestimmung der abgegebenen Wärmemenge ($\Delta Q$) eingerichtet ist,
   wobei
   - das Heizkörperregelventil (150, 250, 350) ein dynamisches Ventilunterteil (151, 251, 351) aufweist, das die Druckdifferenz ($\Delta p$) über dem Heizkörperregelventil (150, 250, 350) konstant hält und
   - die Recheneinheit (121, 221, 321) des Heizkostenverteilers (100, 200, 300) dazu eingerichtet ist, aus der ermittelten Ventilhubstellung ($h$) sowie den gemessenen Größen Vorlauftemperatur ($\vartheta_{VL}$) und Raumlufttemperatur ($\vartheta_{Raum}$) die abgegebene Wärmemenge ($\Delta Q$) zu berechnen, wobei aus der ermittelten Ventilhubstellung ($h$), aus der Vorlauftemperatur ($\vartheta_{VL}$) und aus der Raumlufttemperatur ($\vartheta_{Raum}$) unter Ausnutzung des konstanten Differenzdrucks ($\Delta p$) über dem Heizkörperventil mindestens eine von den gemessenen Raumlufttemperatur ($\vartheta_{Raum}$) und Vorlauftemperatur ($\vartheta_{VL}$) verschiedene, als weitere charakteristische bezeichnete Heizkörpertemperatur ($\vartheta_{RL}$, $\Delta_{\log}$, $\vartheta_x$) ermittelt wird und

   die abgegebene Wärmemenge ($\Delta Q$) unter Verwendung mindestens der gemessenen Vorlauftemperatur ($\vartheta_{VL}$) und der weiteren charakteristischen Heizkörpertemperatur ($\vartheta_{RL}$, $\Delta_{\log}$, $\vartheta_x$) berechnet wird,

   **dadurch gekennzeichnet, dass** die Recheneinheit (121, 221, 321) des Heizkostenverteilers (100, 200, 300) für die Ermittlung der weiteren charakteristischen Heizkörpertemperatur ($\vartheta_{RL}$, $\Delta_{\log}$, $\vartheta_x$) dazu eingerichtet ist,

   - aus der Ventilhubstellung (h) einen Näherungswert für den Heizmediumstrom (m) zu ermitteln und
   - mit dem Näherungswert für den Heizmediumstrom (m) und den gemessenen Größen Vorlauftemperatur ($\vartheta_{VL}$) und Raumlufttemperatur ($\vartheta_{Raum}$) die weitere charakteristische Heizkörpertemperatur ($\vartheta_{RL}$, $\Delta_{\log}$, $\vartheta_x$) zu ermitteln, und dass

   die weitere charakteristische Heizkörpertemperatur eine logarithmische Übertemperatur ($\Delta_{log}$) des Heizkörpers (60) oder ein Mittel aus der Vorlauftemperatur ($\vartheta_{VL}$) und einer ermittelten Rücklauftemperatur ($\vartheta_{RL}$) ist und/oder dass die weitere charakteristische Heizkörpertemperatur eine Heizkörperoberflächentemperatur ($\vartheta_x$) an einer bestimmten Position (x) der Oberfläche des Heizkörpers (60) ist.

2. Heizkostenverteiler nach Anspruch 1, **dadurch gekennzeichnet, dass** die Recheneinheit (121, 221, 321) des Heizkostenverteilers (100, 200, 300) dazu eingerichtet ist, den Näherungswert für den Heizmediumstrom ($\dot{m}$) bei einem konstanten Differenzdruck ($\Delta p$) für die Ventilhubstellung ($h$) unter Verwendung einer ventiltypspezifischen Kenngröße ($K_{VS}$, $S_V$), die den Volumenstrom bei maximaler Ventilhubstellung ($h_{max}$) und einem Referenzdifferenzdruck ($\Delta p_{ref}$) angibt, und einem dimensionslosen funktionalen Zusammenhang ($f(h)$) für die Abhängigkeit von der Ventilhubstellung ($h$) zu ermitteln.

3. Heizkostenverteiler nach einem der vorhergehenden Ansprüche, **dadurch gekennzeichnet, dass** das Heizkörperregelventil (150, 250, 350) des Heizkostenverteilers (100, 200, 300) Bestandteil einer Raumtemperaturregelung ist, welche die Raumtemperatur durch Einstellen des Heizmediumstroms (m) regelt.

4. Heizkostenverteiler nach Anspruch 3, **dadurch gekennzeichnet, dass** das Heizkörperregelventil (150, 250) als Raumtemperaturregler mit einem mechanischen Thermostatkopf (153, 253) ausgebildet ist.

5. Heizkostenverteiler nach Anspruch 4, **dadurch gekennzeichnet, dass** ein motorisch oder elektronisch betriebenes Stellglied vorgesehen ist, welches auf den mechanischen Thermostatkopf (153, 253) zum Einstellen des Heizmediumstroms (m) einwirkt.

6. Heizkostenverteiler nach Anspruch 3, **dadurch gekennzeichnet, dass** das Heizkörperregelventil (350) als Raumtemperaturregler (360) mit einem motorisch oder elektronisch betriebenen Thermostatkopf (353) zum Einstellen des Heizmediumstroms (m) ausgebildet ist.

7. Heizkostenverteiler nach Anspruch 6, **dadurch gekennzeichnet, dass** die Einrichtung zur Ermittlung der Ventilhubstellung (h) dazu eingerichtet ist, die Ventilhubstellung (h) aus einer Hubwertvorgabe des Raumtemperaturreglers zu ermitteln.

8. Heizkostenverteiler nach der vorhergehenden Ansprüche, **dadurch gekennzeichnet, dass** die Einrichtung (103, 203, 303) zur Ermittlung der Ventilhubstellung (h) des Heizkörperregelventils (150, 250, 305) als Positionssensor oder als Positionsgeber (104, 204, 304) ausgebildet ist, der die Stellung des Ventilhubs des Heizkörperregelventils (150, 250, 350) detektiert oder messbar einstellt.

9. Heizkostenverteiler nach einem der vorhergehenden Ansprüche, **dadurch gekennzeichnet, dass** der Heizkostenverteiler (200, 300) mit dem Heizkörperregelventil (250, 350) ein gemeinsames Gehäuse (280, 380) bildet.

10. Heizkostenverteiler nach einem der vorhergehenden Ansprüche, **dadurch gekennzeichnet, dass** der Heizkostenverteiler (300) und das Heizkörperregelventil (350) separate Energieversorgungen (320, 362) aufweisen.

11. Heizkostenverteiler nach Anspruch 10, **dadurch gekennzeichnet, dass** die Energieversorgung (362) des Heizkörperregelventils (350) eine Komponente zur Energiegewinnung aus der Umgebung aufweist.


**Claims**

1. Heat cost allocator for acquiring the heat quantity ($\Delta Q$) delivered by a radiator (60)

   - with a flow temperature sensor (101, 201, 301) for measuring the flow temperature ($\vartheta_{VL}$) of a heat transfer medium,
   - with an ambient air temperature sensor (102, 202, 302) for measuring the ambient air temperature ($\vartheta_{amb}$),
   - with a radiator control valve (150, 250, 350),
   - with a device (103, 203, 303) for determining a valve lift position (h) of the radiator control valve (150, 250, 350), and
   - with a computing unit (121, 221, 321), which is set up to determine the delivered heat quantity ($\Delta Q$),

   wherein

   - the radiator control valve (150, 250, 350) has a dynamic valve lower part (151, 251, 351), which keeps the pressure difference ($\Delta p$) over the radiator control valve (150, 250, 350) constant, and
   - the computing unit (121, 221, 321) of the heat cost allocator (100, 200, 300) is set up to calculate the delivered heat quantity ($\Delta Q$) from the determined valve lift position (h) and the measured variables flow temperature ($\vartheta_{VL}$) and ambient air temperature ($\vartheta_{amb}$)

   wherein

   at least one radiator temperature ($\vartheta_{RL}$, $\Delta_{log}$, $\vartheta_x$) that differs from the measured ambient air temperature ($\vartheta_{amb}$) and flow temperature ($\vartheta_{VL}$) and is designated as an additional characteristic one is determined from the determined valve lift position (h), the flow temperature ($\vartheta_{VL}$) and the ambient air temperature ($\vartheta_{amb}$) using the constant differential pressure ($\Delta p$), and
   the delivered heat quantity ($\Delta Q$) is calculated using at least the measured flow temperature ($\vartheta_{VL}$) and the additional characteristic radiator temperature ($\vartheta_{RL}$, $\Delta_{log}$, $\vartheta_x$),
   **characterized in that** the computing unit (121, 221, 321) of the heat cost allocator (100, 200, 300) for determining the additional characteristic radiator temperature ($\vartheta_{RL}$, $\Delta_{log}$, $\vartheta_x$) is set up to

   - determine an approximate value for the heat medium flow (m) from the valve lift position (h), and
   - use the approximate value for the heating medium flow (m) and the measured variables flow temperature ($\vartheta_{VL}$) and ambient air temperature ($\vartheta_{amb}$) to determine the additional characteristic radiator temperature ($\vartheta_{RL}$, $\Delta_{log}$, $\vartheta_x$) and that

the additional characteristic radiator temperature is a logarithmic excessive temperature ($\Delta_{\log}$) of the radiator (60) or an average of the flow temperature ($\vartheta_{VL}$) and a determined return flow temperature ($\vartheta_{RL}$) and/or
that the additional characteristic radiator temperature is a radiator surface temperature ($\vartheta_x$) at a specific position (x) of the surface of the radiator (60).

2. The heat cost allocator according to claim 1, **characterized in that** the computing unit (121, 221, 321) of the heat cost allocator (100, 200, 300) is set up to determine the approximate value for the heating medium flow (m) at a constant differential pressure ($\Delta p$) for the valve lift position (h) using a valve type-specific parameter ($K_{VS}$, $S_V$), which indicates the volume flow at a maximum valve lift position ($h_{max}$) and a reference differential pressure ($\Delta p_{ref}$), and a dimensionless functional correlation (f(h)) for the dependence on the valve lift position (h).

3. The heat cost allocator according to one of the preceding claims, **characterized in that** the radiator control valve (150, 250, 350) of the heat cost allocator (100, 200, 300) is a constituent of an ambient temperature controller, which controls the ambient temperature by setting the heating medium flow (m).

4. The heat cost allocator according to claim 3, **characterized in that** the radiator control valve (150, 250) is designed as an ambient temperature controller with a mechanical thermostatic head (153, 253).

5. The heat cost allocator according to claim 4, **characterized in that** a motor-driven or electronically operated actuator is provided, which acts on the mechanical thermostatic head (153, 253) for setting the heating medium flow (m).

6. The heat cost allocator according to claim 3, **characterized in that** the radiator control valve (350) is designed as an ambient temperature controller (360) with a motor-driven or electronically operated thermostatic head (353) for setting the heating medium flow (m).

7. The heat cost allocator according to claim 6, **characterized in that** the device for determining the valve lift position (h) is set up to determine the valve lift position (h) from a prescribed lift value of the ambient temperature controller.

8. The heat cost allocator according to one of the preceding claims, **characterized in that** the device (103, 203, 303) for determining the valve lift position (h) of the radiator control valve (150, 250, 350) is designed as a position sensor or as a position detector (104, 204, 304), which detects or measurably adjusts the position of the valve lift of the radiator control valve (150, 250, 350).

9. The heat cost allocator according to one of the preceding claims, **characterized in that** the heat cost allocator (200, 300) forms a shared housing (280, 380) with the radiator control valve (250, 350).

10. The heat cost allocator according to one of the preceding claims, **characterized in that** the heat cost allocator (300) and the radiator control valve (350) have separate power supplies (320, 362).

11. The heat cost allocator according to claim 10, **characterized in that** the power supply (362) of the radiator control valve (350) has a component for generating energy from the environment.

**Revendications**

1. Répartiteur de frais de chauffage permettant de détecter la quantité de chaleur distribuée (*ΔQ*) par un corps de chauffe (60)

- avec un capteur de température d'arrivée (101, 201, 301) pour mesurer la température d'arrivée ($\vartheta_{VL}$) d'un milieu caloporteur,
- avec un capteur de température de l'air ambiant (102, 202, 302) pour mesurer la température de l'air ambiant ($\vartheta_{Raum}$),
- avec une soupape de régulation de corps de chauffe (150, 250, 350),
- avec un système (103, 203, 303) pour déterminer une position de course de soupape (h) de la soupape de régulation du corps de chauffe (150, 250, 350) et
- avec une unité de calcul (121, 221, 321), laquelle est agencée pour déterminer la quantité de chaleur distribuée ($\Delta Q$),

sachant que

- la soupape de régulation de corps de chauffe (150, 250, 350) comporte une partie inférieure de soupape (151, 251, 351), qui maintient la différence de pression ($\Delta p$) constante par le biais de la soupape de régulation de corps de chauffe (150, 250, 350) et
- l'unité de calcul (121, 221, 321) du répartiteur de frais de chauffage (100, 200, 300) est agencée pour calculer la quantité de chaleur distribuée ($\Delta Q$) à partir de la position de course de la soupape déterminée (h) ainsi que des valeurs mesurées : température d'arrivée ($\vartheta_{VL}$) et température de l'air ambiant ($\vartheta_{Raum}$),

sachant

qu'au moins une température différente de la température de l'air ambiant ($\vartheta_{Raum}$), et de la température d'arrivée ($\vartheta_{VL}$) mesurées, désignée comme autre température de corps de chauffe caractéristique ($\vartheta_{RL}$, $\Delta_{log}$, $\vartheta_x$), est déterminée à partir de la position de course de la soupape déterminée (h), de la température d'arrivée ($\vartheta_{VL}$) et de la température de l'air ambiant ($\vartheta_{Raum}$), en mettant à profit la pression différentielle ($\Delta p$) constante par le biais de la soupape de corps de chauffe et
que la quantité de chaleur distribuée *($\Delta Q$)* est calculée en utilisant au moins la température d'arrivée ($\vartheta_{VL}$) mesurée et l'autre température de corps de chauffe caractéristique ($\vartheta_{RL}$, $\Delta_{log}$, $\vartheta_x$).
**caractérisé en ce que** l'unité de calcul (121, 221, 321) du répartiteur de frais de chauffage (100, 200, 300) pour la détermination de l'autre température de corps de chauffe caractéristique ($\vartheta_{RL}$, $\Delta_{log}$, $\vartheta_x$) est agencée

- pour déterminer à partir de la position de course de soupape (h) une valeur approximative pour le débit du milieu chauffant (m) et
- déterminer l'autre température de corps de chauffe caractéristique ($\vartheta_{RL}$, $\Delta_{log}$, ($\vartheta_x$) avec la valeur approximative pour le débit du milieu chauffant (m) et les valeurs mesurées : température d'arrivée ($\vartheta_{VL}$) et température de l'air ambiant ($\vartheta_{raum}$), et que

l'autre température de corps de chauffe caractéristique est une température supérieure à la normale logarithmique *($\Delta_{log}$)* du corps de chauffe (60) ou une moyenne de la température d'arrivée ($\vartheta_{VL}$) et d'une température de retour déterminée ($\vartheta_{RL}$)
et/ou
que l'autre température de corps de chauffe caractéristique est une température de surface de corps de chauffe ($\vartheta_x$) sur une position déterminée (x) de la surface du corps de chauffe (60).

2. Répartiteur de frais de chauffage selon la revendication 1, **caractérisé en ce que** l'unité de calcul (121, 221, 321) du répartiteur de frais de chauffage (100, 200, 300) est agencée pour déterminer la valeur approximative pour le débit du milieu chauffant (m) à une pression différentielle constante ($\Delta p$) pour la position de la course de soupape (h) en utilisant une grandeur caractéristique spécifique au type de soupape ($K_{VS}$, $S_V$), qui indique le débit volumétrique à une position de course de soupape maximale ($h_{max}$) et à une pression différentielle de référence (($\Delta p_{ref}$), et pour un rapport fonctionnel adimensionnel (f(h)) en fonction de la position de course de soupape (h).

3. Répartiteur de frais de chauffage selon l'une quelconque des revendications précédentes, **caractérisé en ce que** la soupape de régulation du corps de chauffe (150, 250, 350) du répartiteur de frais de chauffage (100, 200, 300) est un composant d'une régulation de température ambiante, lequel régule la température ambiante par réglage du débit du milieu chauffant (m).

4. Répartiteur de frais de chauffage selon la revendication 3, **caractérisé en ce que** la soupape de régulation du corps de chauffe (150, 250) est constituée comme régulateur de température ambiante avec une tête de thermostat mécanique (153, 253).

5. Répartiteur de frais de chauffage selon la revendication 4, **caractérisé en ce qu'**un organe de réglage à commande motorisée ou électronique est prévu, lequel agit sur la tête de thermostat mécanique (153, 253) pour régler le débit du milieu chauffant (m).

6. Répartiteur de frais de chauffage selon la revendication 3, **caractérisé en ce que** la soupape de régulation du corps de chauffe (350) est constituée comme régulateur de température ambiante (360) avec une tête de thermostat (353) à commande motorisée ou électronique pour régler le débit du milieu chauffant (*m*).

7. Répartiteur de frais de chauffage selon la revendication 6, **caractérisé en ce que** le système de détermination de la position de course de soupape (h) est agencé pour déterminer la position de course de soupape (h) à partir d'une consigne de valeur de course du régulateur de température ambiante.

8. Répartiteur de frais de chauffage selon l'une quelconque des revendications précédentes, **caractérisé en ce que** le système (103, 203, 303) pour déterminer la position de course de la soupape (h) de la soupape de régulation du corps de chauffe (150, 250, 350) est constitué comme capteur de position ou comme indicateur de position (104, 204, 304), qui détecte ou règle de façon mesurable la position de la course de soupape de la soupape de régulation de corps de chauffe (150, 250, 350).

9. Répartiteur de frais de chauffage selon l'une quelconque des revendications précédentes, **caractérisé en ce que** le répartiteur de frais de chauffage (200, 300) forme avec la soupape de régulation de corps de chauffe (250, 350) un boîtier commun (280, 380).

10. Répartiteur de frais de chauffage selon l'une quelconque des revendications précédentes, **caractérisé en ce que** le répartiteur de frais de chauffage (300) et la soupape de régulation du corps de chauffage (350) comportent des alimentations en énergie séparées (320, 362) .

11. Répartiteur de frais de chauffage selon la revendication 10, **caractérisé en ce que** l'alimentation en énergie (362) de la soupape de régulation du corps de chauffe (350) comporte un composant pour la récupération d'énergie à partir de l'environnement.

EP 3 524 951 B2

Fig. 1

Fig. 5

Fig. 2

$\Delta p = const$

Fig. 3

Fig. 4

$\Delta p = const$

# Rücklaufübertemperaturabweichung
## (Variante 1)

Fig. 6

# Rücklaufübertemperaturabweichung
## (Variante 2)

Fig. 7

**Abweichung Leistungsberechnung**

—◆—Vorlauftemperatur = 30°C —■—Vorlauftemperatur = 40°C
—▲—Vorlauftemperatur = 55°C —✕—Vorlauftemperatur = 70°C

Fig. 8

**Abweichung Leistungsberechnung**

—◆—Vorlauftemperatur = 30°C —■—Vorlauftemperatur = 40°C
—▲—Vorlauftemperatur = 55°C —✕—Vorlauftemperatur = 70°C

Fig. 9

**EP 3 524 951 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2068138 A2

- EP 3217157 A1